(19) Europäisches Patentamt
European Patent Office
Office européen des brevets

(11) **EP 4 564 961 A1**

(12) **EUROPEAN PATENT APPLICATION**
published in accordance with Art. 153(4) EPC

(43) Date of publication:
**04.06.2025 Bulletin 2025/23**

(21) Application number: **23845554.7**

(22) Date of filing: **25.07.2023**

(51) International Patent Classification (IPC):
*H04W 72/04* (2023.01)       *H04L 5/00* (2006.01)

(52) Cooperative Patent Classification (CPC):
**H04L 5/00; H04W 72/04; H04W 72/044;
H04W 72/0453; H04W 72/21**

(86) International application number:
**PCT/CN2023/109138**

(87) International publication number:
**WO 2024/022345 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.07.2022   CN 202210904060**

(71) Applicant: **SHANGHAI LANGBO
COMMUNICATION TECHNOLOGY
COMPANY LIMITED
Shanghai 200240 (CN)**

(72) Inventors:
• **LIU, Zheng
  Shanghai 201206 (CN)**
• **ZHANG, Xiaobo
  Shanghai 201206 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **METHOD AND APPARATUS USED IN NODE FOR WIRELESS COMMUNICATION**

(57)     Disclosed in the present application are a method and apparatus used in a node for wireless communication. The method comprises: a node receiving a first information block and receiving a first DCI format, wherein the first DCI format at least comprises a first domain, and the first information block is used for determining whether the first DCI format comprises a second domain; and the node sending a first PUSCH, wherein a waveform used by the first PUSCH is a target waveform, and the target waveform is one of X1 candidate waveforms. When the first DCI format comprises the second domain, the second domain comprised in the first DCI format is used for determining the target waveform from among the X1 candidate waveforms. A target size is equal to the size of the first domain comprised in the first DCI format, and the target size is equal to one of X2 candidate sizes; and the target size is equal to the maximum candidate size among candidate sizes, which correspond to the X1 candidate waveforms, among the X2 candidate sizes. The present application ensures correct reception of DCI.

FIG. 1

**Description**

**TECHNICAL FIELD**

The present application relates to transmission methods and devices in wireless communication systems, and in particular to a transmission scheme and device of uplink transmission in wireless communications.

**BACKGROUND**

Application scenarios of future wireless communication systems are becoming increasingly diversified, and different application scenarios have different performance demands on systems. In order to meet different performance requirements of various application scenarios, it was decided at 3rd Generation Partner Project (3GPP) Radio Access Network (RAN) #72th plenary that a study on New Radio (NR), or what is called Fifth Generation (5G) shall be conducted. The work item (WI) of NR was approved at 3GPP RAN #75th plenary to standardize NR.

In uplink transmission of NR technology, both Cyclic Prefix-Orthogonal Frequency Division Multiplexing (CP-OFDM) and Discrete Fourier Transform-Spread-Orthogonal Frequency Division Multiplexing (DFT-s-OFDM) waveforms are supported. These two waveforms can meet different application demands for different application scenarios.

**SUMMARY**

In R17 and previous versions of 5G New Radio (NR), a waveform for uplink transmission is mainly configured in a semi-persistent manner. In R18 version, it is planned to support a configuration of dynamic uplink transmission waveforms.

The present application discloses a solution to the problems faced in the configuration of dynamic uplink transmission waveforms. It should be noted that in the description of the present application, dynamic waveform configuration is only used as a typical application scenario or example; the present application is also applicable to other scenarios facing similar problems (such as other scenarios with dynamic changes in coverage or high-speed movement, including but not limited to capacity enhancement systems, systems using higher frequency, coverage enhancement systems, unlicensed frequency-domain communications, Internet of Things (IoT), Ultra Reliable Low Latency Communication (URLLC) networks, Vehicle-to-everything, etc.), where similar technical effects can also be achieved. Additionally, the adoption of a unified solution for various scenarios, including but not limited to scenarios of multicarrier, contributes to the reduction of hardware complexity and costs. If no conflict is incurred, embodiments in a first node and characteristics of the embodiments in the present application are also applicable to a second node, and vice versa. Particularly, for interpretations of the terminology, nouns, functions and variants (if not specified) in the present application, refer to definitions given in TS36 series, TS37 series and TS38 series of 3GPP specifications.

The present application provides a method in a first node for wireless communications, comprising:

receiving a first information block and receiving a first DCI (Downlink Control Information) format, the first DCI format at least comprising a first field, the first information block being used to determine whether the first DCI format comprises a second field, the first field and the second field comprised in the first DCI format being two different fields; and

transmitting a first PUSCH (Physical Uplink Share Channel), a waveform adopted by the first PUSCH being a target waveform, the target waveform being one of X1 candidate waveforms, X1 being a positive integer greater than 1; herein, when the first DCI format comprises the second field, the second field comprised in the first DCI format is used to determine the target waveform out of the X1 candidate waveforms; a target size is equal to a size of the first field comprised in the first DCI format, the target size is equal to one of X2 candidate sizes, and each one of the X2 candidate sizes is an integer equal to or greater than 0, X2 being a positive integer greater than 1; the target size is equal to a maximum candidate size of candidate sizes corresponding to the X1 candidate waveforms among the X2 candidate sizes.

According to one aspect of the present application, the above method is characterized in that a first waveform and a second waveform are respectively two different candidate waveforms among the X1 candidate waveforms, and a size of the first field corresponding to the first waveform and a size of the first field corresponding to the second waveform are not equal; at least one MSB (Most Significant Bit) equal to "0" is added to the first field with a smaller size, until the size of the first field corresponding to the first waveform and the size of the first field corresponding to the second waveform are equal.

According to one aspect of the present application, the above method is characterized in comprising:

receiving a second information block;
herein, the second information block is used to determine a reference waveform, and the reference waveform is one of the X1 candidate waveforms; when the first DCI format does not comprise the second field, the target waveform and the reference waveform are the same.

According to one aspect of the present application, the above method is characterized in that transmit power of the first PUSCH is equal to a smaller one between a first upper limit value and a first power value, a first parameter value is used to determine the first upper limit value, and a second parameter value is used to determine the first power value; at least the first parameter value between the first parameter value and the second parameter value is related to the target waveform.

According to one aspect of the present application, the above method is characterized in that the first DCI format is associated with a first search space set, and the first search space set is a UE-specific search space (USS) set; the first DCI format is a DCI format other than DCI format 0_0, a first identifier is used for a scrambling sequence of a PDCCH (Physical Downlink Control Channel) carrying the first DCI format, and the first identifier is pre-defined.

According to one aspect of the present application, the above method is characterized in that the first DCI format comprises a third field, the third field and the first field are different, and the third field and the second field are different; an MCS (modulation and coding scheme) adopted by the first PUSCH belongs to a first MCS set, the first MCS set comprises multiple MCSs, the third field is used to determine an MCS adopted by the first PUSCH from the first MCS set, and the target waveform is used to determine the first MCS set.

According to one aspect of the present application, the above method is characterized in that X3 candidate sizes correspond to the target waveform, X3 being a positive integer greater than 1 and less than X2, and each one of the X3 candidate sizes is one of the X2 candidate sizes; at least one of a maximum rank corresponding to the first PUSCH, a type of a demodulation reference signal of the first PUSCH, or a transmission scheme corresponding to the first PUSCH is used to determine the target size from the X3 candidate sizes.

The present application provides a method in a second node for wireless communications, comprising:

transmitting a first information block and transmitting a first DCI format, the first DCI format at least comprising a first field, the first information block being used to determine whether the first DCI format comprises a second field, the first field and the second field comprised in the first DCI format being two different fields; and

receiving a first PUSCH, a waveform adopted by the first PUSCH being a target waveform, the target waveform being one of X1 candidate waveforms, X1 being a positive integer greater than 1;

herein, when the first DCI format comprises the second field, the second field comprised in the first DCI format is used to determine the target waveform out of the X1 candidate waveforms; a target size is equal to a size of the first field comprised in the first DCI format, the target size is equal to one of X2 candidate sizes, and each one of the X2 candidate sizes is an integer equal to or greater than 0, X2 being a positive integer greater than 1; the target size is equal to a maximum candidate size of candidate sizes corresponding to the X1 candidate waveforms among the X2 candidate sizes.

According to one aspect of the present application, the above method is characterized in that a first waveform and a second waveform are respectively two different candidate waveforms among the X1 candidate waveforms, and a size of the first field corresponding to the first waveform and a size of the first field corresponding to the second waveform are not equal; at least one MSB equal to "0" is added to the first field with a smaller size, until the size of the first field corresponding to the first waveform and the size of the first field corresponding to the second waveform are equal.

According to one aspect of the present application, the above method is characterized in comprising:

transmitting a second information block;

herein, the second information block is used to determine a reference waveform, and the reference waveform is one of the X1 candidate waveforms; when the first DCI format does not comprise the second field, the target waveform and the reference waveform are the same.

According to one aspect of the present application, the above method is characterized in that transmit power of the first PUSCH is equal to a smaller one between a first upper limit value and a first power value, a first parameter value is used to determine the first upper limit value, and a second parameter value is used to determine the first power value; at least the first parameter value between the first parameter value and the second parameter value is related to the target waveform.

According to one aspect of the present application, the above method is characterized in that the first DCI format is associated with a first search space set, and the first search space set is a USS set; the first DCI format is a DCI format other than DCI format 0_0, a first identifier is used for a scrambling sequence of a PDCCH carrying the first DCI format, and the first identifier is pre-defined.

According to one aspect of the present application, the above method is characterized in that the first DCI format comprises a third field, the third field and the first field are different, and the third field and the second field are different; an MCS adopted by the first PUSCH belongs to a first MCS set, the first MCS set comprises multiple MCSs, the third field is used to determine an MCS adopted by the first PUSCH from the first MCS set, and the target waveform is used to determine the first MCS set.

According to one aspect of the present application, the above method is characterized in that X3 candidate sizes correspond to the target waveform, X3 being a positive integer greater than 1 and less than X2, and each one of the X3 candidate sizes is one of the X2 candidate sizes; at least one of a maximum rank corresponding to the first PUSCH, a type of a demodulation reference signal of the first PUSCH, or a transmission scheme corresponding to the first PUSCH is used to determine the target size from the X3 candidate sizes.

The present application provides a first node for wireless communications, comprising:

a first receiver, receiving a first information block and a first DCI format, the first DCI format at least comprising a first field, the first information block being used to determine whether the first DCI format comprises a second field, the first field and the second field comprised in the first DCI format being two different fields; and
a first transmitter, transmitting a first PUSCH, a waveform adopted by the first PUSCH being a target waveform, the target waveform being one of X1 candidate waveforms, X1 being a positive integer greater than 1;
herein, when the first DCI format comprises the second field, the second field comprised in the first DCI format is used to determine the target waveform out of the X1 candidate waveforms; a target size is equal to a size of the first field comprised in the first DCI format, the target size is equal to one of X2 candidate sizes, and each one of the X2 candidate sizes is an integer equal to or greater than 0, X2 being a positive integer greater than 1; the target size is equal to a maximum candidate size of candidate sizes corresponding to the X1 candidate waveforms among the X2 candidate sizes.

The present application provides a second node for wireless communications, comprising:

a second transmitter, transmitting a first information block and transmitting a first DCI format, the first DCI format at least comprising a first field, the first information block being used to determine whether the first DCI format comprises a second field, the first field and the second field comprised in the first DCI format being two different fields; and
a second receiver, receiving a first PUSCH, a waveform adopted by the first PUSCH being a target waveform, the target waveform being one of X1 candidate waveforms, X1 being a positive integer greater than 1;
herein, when the first DCI format comprises the second field, the second field comprised in the first DCI format is used to determine the target waveform out of the X1 candidate waveforms; a target size is equal to a size of the first field comprised in the first DCI format, the target size is equal to one of X2 candidate sizes, and each one of the X2 candidate sizes is an integer equal to or greater than 0, X2 being a positive integer greater than 1; the target size is equal to a maximum candidate size of candidate sizes corresponding to the X1 candidate waveforms among the X2 candidate sizes.

## BRIEF DESCRIPTION OF THE DRAWINGS

Other features, objects and advantages of the present application will become more apparent from the detailed description of non-restrictive embodiments taken in conjunction with the following drawings:

FIG. 1 illustrates a flowchart of a first information block, a first DCI format and a first PUSCH according to one embodiment of the present application;
FIG. 2 illustrates a schematic diagram of a network architecture according to one embodiment of the present application;
FIG. 3 illustrates a schematic diagram of a radio protocol architecture of a user plane and a control plane according to one embodiment of the present application;
FIG. 4 illustrates a schematic diagram of a first node and a second node according to one embodiment of the present application;
FIG. 5 illustrates a flowchart of a radio signal transmission according to one embodiment of the present application;
FIG. 6 illustrates a schematic diagram of a first field according to one embodiment of the present application;
FIG. 7 illustrates a schematic diagram of a relation of a target waveform and a reference waveform according to one embodiment of the present application;
FIG. 8 illustrates a schematic diagram of transmit power of a first PUSCH according to one embodiment of the present application;
FIG. 9 illustrates a schematic diagram of a first search space set according to one embodiment of the present application;
FIG. 10 illustrates a schematic diagram of a first MCS set according to one embodiment of the present application;

FIG. 11 illustrates a schematic diagram of a target size according to one embodiment of the present application;

FIG. 12 illustrates a structure block diagram of a processor in a first node according to one embodiment of the present application;

FIG. 13 illustrates a structure block diagram of a processor in second node according to one embodiment of the present application.

## DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

## Embodiment 1

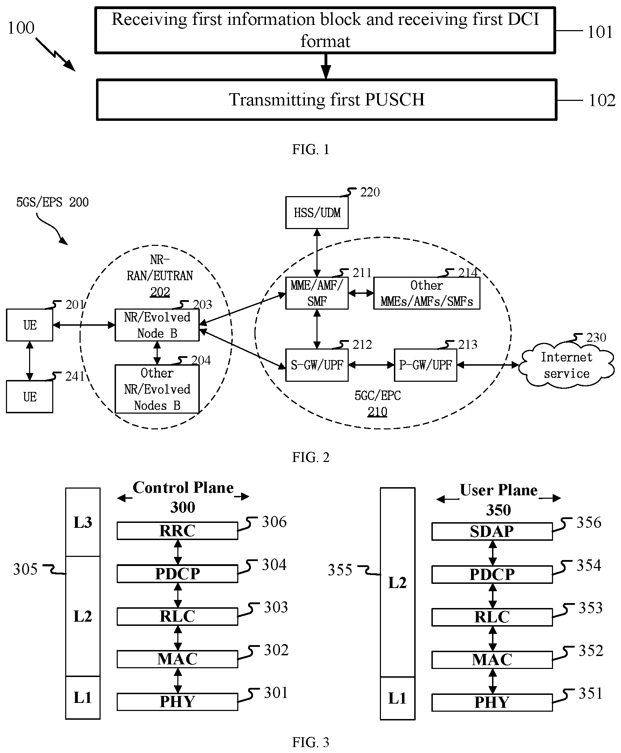

Embodiment 1 illustrates a flowchart 100 of a first information block, a first DCI format and a first PUSCH according to one embodiment of the present application, as shown in FIG. 1. In FIG. 1, each box represents a step. Particularly, the sequential order of steps in these boxes is just an example, which does not necessarily mean that the steps are chronologically arranged.

In embodiment 1, the first node in the present application receives a first information block and a first DCI format in step 101, the first DCI format at least comprises a first field, the first information block is used to determine whether the first DCI format comprises a second field, and the first field and the second field comprised in the first DCI format are two different fields; the first node in the present application transmits a first PUSCH in step 102, a waveform adopted by the first PUSCH is a target waveform, and the target waveform is one of X1 candidate waveforms, X1 being a positive integer greater than 1; when the first DCI format comprises the second field, the second field comprised in the first DCI format is used to determine the target waveform out of the X1 candidate waveforms; a target size is equal to a size of the first field comprised in the first DCI format, the target size is equal to one of X2 candidate sizes, and each one of the X2 candidate sizes is an integer equal to or greater than 0, X2 being a positive integer greater than 1; the target size is equal to a maximum candidate size of candidate sizes corresponding to the X1 candidate waveforms among the X2 candidate sizes.

In one embodiment, a target size is equal to a maximum candidate size of candidate sizes corresponding to X1 candidate waveforms, ensuring the correct reception of the DCI format.

In one embodiment, the first information is transmitted via an air interface or radio interface.

In one embodiment, the first information block comprises all or part of a higher-layer signaling or physical-layer signaling.

In one embodiment, the first information block comprises all or part of a Radio Resource Control (RRC)-layer signaling, or the first information block comprises all or part of a Medium Access Control (MAC)-layer signaling.

In one embodiment, the first information block comprises all or part of a System Information Block (SIB).

In one embodiment, the first information block is UE-specific.

In one embodiment, the first information is configured per carrier, or the first information is configured per Bandwidth Part (BWP), or the first information is configured per band or per Frequency Range (FR).

In one embodiment, the first information block comprises all or partial fields in a Downlink Control Information (DCI) format.

In one embodiment, the first information block comprises all or part of Information Element (IE) "PUSCH-Config"; or the first information block comprises all or part of IE "BWP-UplinkDedicated"; or the first information block comprises all or part of IE "BWP-Uplink"; or the first information block comprises all or part of IE "ServingCellConfig"; or the first information block comprises all or part of IE "UplinkConfig".

In one embodiment, the first information block comprises all or part of IE "ConfiguredGrantConfig".

In one embodiment, the first information block comprises all or part of IE "PTRS-UplinkConfig".

In one embodiment, the first information block comprises all or part of IE "PUSCH-ConfigCommon".

In one embodiment, the first information block comprises higher-layer parameter "msg3-transformPrecoder" or "msgA-TransformPrecoder".

In one embodiment, the first information block comprises higher-layer parameter "transformPrecoder".

In one embodiment, the first information block comprises all or part of IE "pdcch-ConfigCommon", or the first information block comprises all or part of IE "BWP-DownlinkCommon", or the first information block comprises all or part of IE "BWP-DownlinkDedicated", or the first information block comprises all or part of IE "pdcch-Config", or the first information block comprises all or part of IE "SearchSpace", or the first information block comprises all or part of IE "SearchSpaceExt-v1800", or the first information block comprises all or part of IE "SearchSpaceExt2-r18".

In one embodiment, the technical feature that "the first information block is used to determine whether the first DCI format comprises a second field" includes the following meaning: the first information block is used by the first node in the present application to determine whether the first DCI format comprises the second field.

In one embodiment, the technical feature that "the first information block is used to determine whether the first DCI format comprises a second field" includes the following meaning: the first information block is used to determine the first DCI format.

In one embodiment, the technical feature that "the first information block is used to determine whether the first DCI format comprises a second field" includes the following meaning: the first information block is used to configure a search space set that supports the first DCI format.

In one embodiment, the technical feature that "the first information block is used to determine whether the first DCI format comprises a second field" includes the following meaning: the first information block is used to configure a search space set, and a search space set configured by the first information block at least supports the first DCI format.

In one embodiment, the technical feature that "the first information block is used to determine whether the first DCI format comprises a second field" includes the following meaning: the first information block is used to configure at least one DCI format supported by a search space set, and one DCI format supported by a search space set configured by the first information block comprises the first DCI format.

In one embodiment, all DCI formats supported by a search space set configured with the first DCI format support comprising the second field.

In one embodiment, only partial DCI formats in all DCI formats supported by a search space set configured with the first DCI format support comprising the second field.

In one embodiment, the technical feature that "the first information block is used to determine whether the first DCI format comprises a second field" includes the following meaning: all or part comprised in the first information block is used to explicitly or implicitly indicate whether the first DCI format comprises the second field.

In one embodiment, the technical feature that "the first information block is used to determine whether the first DCI format comprises a second field" includes the following meaning: all or part of the first information block is used to explicitly or implicitly indicate whether to dynamically convert an uplink waveform, and whether to dynamically convert the uplink waveform is used to determine whether the first DCI format comprises the second field.

In one embodiment, the technical feature that "the first information block is used to determine whether the first DCI format comprises a second field" includes the following meaning: all or part of the first information block is used to explicitly or implicitly indicate whether to enable/disable (or on/off) transform precoding (or transform precoder), and whether to dynamically enable/disable (or on/off) transform precoding (or transform precoder) is used to determine whether the first DCI format comprises the second field.

In one embodiment, the technical feature that "the first information block is used to determine whether the first DCI format comprises a second field" includes the following meaning: a feature field is a field comprised in the first information block; when a value of the feature field comprised in the first information block is equal to a value (or a state), the first DCI format comprises the second field; when a value of the feature field comprised in the first information block is equal to another value (or another state), the first DCI format does not comprise the second field.

In one embodiment, the technical feature that "the first information block is used to determine whether the first DCI format comprises a second field" includes the following meaning: whether the first information block is configured or provided is used to determine whether the first DCI format comprises the second field.

In one embodiment, the technical feature that "the first information block is used to determine whether the first DCI format comprises a second field" includes the following meaning: the first information block being configured, provided, or received is used to determine that the first DCI format comprises the second field.

In one embodiment, the technical feature that "the first information block is used to determine whether the first DCI format comprises a second field" includes the following meaning: the first information block being configured, provided, or received is used to determine that the first DCI format does not comprise the second field.

In one embodiment, the technical feature that "the first information block is used to determine whether the first DCI format comprises a second field" includes the following meaning: when the first information block is configured or provided, the first DCI format comprises the second field; when the first information block is not configured or provided, the first DCI format does not comprise the second field.

In one embodiment, the technical feature that "the first information block is used to determine whether the first DCI format comprises a second field" includes the following meaning: when the first information block is configured or provided, the first DCI format does not comprise the second field; when the first information block is not configured or provided, the first DCI format comprises the second field.

In one embodiment, the technical feature that "the first information block is used to determine whether the first DCI format comprises a second field" includes the following meaning: when all or part comprised in the first information block explicitly or implicitly indicates disabling transform precoding (or transform precoder), the first DCI format comprises the second field; when all or part comprised in the first information block explicitly or implicitly indicates enabling transform precoding (or a transform precoder), the first DCI format does not comprise the second field.

In one embodiment, the technical feature that "the first information block is used to determine whether the first DCI format comprises a second field" includes the following meaning: when all or part comprised in the first information block explicitly or implicitly indicates disabling transform precoding (or transform precoder), the first DCI format does not comprise the second field; when all or part comprised in the first information block explicitly or implicitly indicates enabling transform precoding (or transform precoder), the first DCI format comprises the second field.

In one embodiment, the technical feature that "the first information block is used to determine whether the first DCI format comprises a second field" includes the following meaning: all or part comprised in the first information block is used to explicitly or implicitly indicate an uplink waveform, and the uplink waveform indicated by the first information block is used to determine whether the first DCI format comprises the second field.

In one embodiment, the technical feature that "the first information block is used to determine whether the first DCI format comprises a second field" includes the following meaning: all or part comprised the first information block is used to explicitly or implicitly indicate whether to enable/disable (or on/off) transform precoding (or transform precoder), and a switch state of transform precoding (or transform precoder) indicated by the first information block is used to determine whether the first DCI format comprises the second field.

In one embodiment, the expressions that "the first information block is provided" and "the first DCI format comprises the second field" are equivalent or interchangeable.

In one embodiment, the expressions that "the first information block is configured" and "the first DCI format comprises the second field" are equivalent or interchangeable.

In one embodiment, the expressions that "the first information block is not provided" and "the first DCI format does not comprise the first field" are equivalent or interchangeable.

In one embodiment, the expressions that "the first information block is not configured" and "the first DCI format does not comprise the first field" are equivalent or interchangeable.

In one embodiment, the expressions that "a value of a parameter comprised in the first information block is equal to a first parameter value" and "the first DCI format comprises the first field" are equivalent or interchangeable, and the first parameter value is pre-defined or configurable.

In one embodiment, the expressions that "a value of a parameter comprised in the first information block is equal to a second parameter value" and "the first DCI format does not comprise the first field" are equivalent or interchangeable, and the second parameter value is pre-defined or configurable.

In one embodiment, "a value of a parameter comprised in the first information block indicates dynamically enabling/disabling (or on/off) transform precoding (or a transform precoding)" and "the first DCI format comprises the second field" are equivalent or interchangeable.

In one embodiment, a value of a parameter comprised in the first information block indicates dynamically enabling/disabling (or on/off) transform precoding (or transform precoder is not supported), and "the first DCI format does not comprise the second field" are equivalent or interchangeable.

In one embodiment, the expressions that "a value of a parameter comprised in the first information block indicates dynamically enabling/disabling (or on/off) transform precoding (or transform precoder is not supported or the first information block is not provided (or not configured))" and "the first DCI format does not comprise the second field" are equivalent or interchangeable.

In one embodiment, the two expressions that "a value of a parameter comprised in the first information block indicates dynamically switching waveforms" and "the first DCI format comprises the second field" are equivalent or interchangeable.

In one embodiment, the two expressions that "a value of a parameter comprised in the first information block indicates that dynamically switching waveforms is not supported" and "the first DCI format does not comprise the second field" are equivalent or interchangeable.

In one embodiment, the two expressions that "a value of a parameter comprised in the first information block indicates that dynamically switching waveforms is not supported or the first information block is not provided (or is not configured)" and "the first DCI format does not comprise the second field" are equivalent or interchangeable.

In one embodiment, a value of a parameter comprised in the first information block indicates disabling transform precoding (or transform precoder), and "the first DCI format comprises the second field" are equivalent or interchangeable.

In one embodiment, a value of a parameter comprised in the first information block indicates enabling transform precoding (or transform precoder), and "the first DCI format comprises the second field" are equivalent or interchangeable.

In one embodiment, the first information block comprises a switch state of transform precoding (or transform precoder) of the first PUSCH when transform precoding (or transform precoder) switch parameters in a configuration signaling of the physical uplink shared channel (PUSCH) default.

In one embodiment, the first DCI format is a DCI format used for scheduling a PUSCH.

In one embodiment, the first DCI format is 0_1, or the first DCI format is 0_2, or the first DCI format is 0_K, or the first DCI format is one of 0_2 and 0_K, or the first DCI format is one of 0_1, 0_2 and 0_K, or the first DCI format is one of 0_1 and 0_2, or the first DCI format is one of 0_1 and 0_K; where K is a positive integer greater than 2. In one subsidiary embodiment of the above embodiment, K is equal to 3. In one subsidiary embodiment of the above embodiment, K is equal to 4. In one subsidiary embodiment of the above embodiment, K is equal to 5.

In one embodiment, the first DCI format is 0_0.

In one embodiment, the first DCI format is a DCI format other than 0_0.

In one embodiment, a DCI format group to which the first DCI format belongs is pre-defined or configured.

In one embodiment, a DCI format group to which the first DCI format belongs is configured through a PDCCH configuration signaling.

In one embodiment, a DCI format group configured through a configuration signaling of the first search space in the present application comprises the first DCI format.

In one embodiment, at least one DCI format configured through a configuration signaling of the first search space in the present application comprises the first DCI format.

In one embodiment, the first DCI format is a DCI format scheduling an uplink channel or signal.

In one embodiment, the first DCI format is one of DCI formats supported by a UE-Specific Search Set (USS set).

In one embodiment, at least one DCI format configured through a USS set configuration signaling comprises the first DCI format.

In one embodiment, the first DCI format is transmitted through a Physical Downlink Control Channel (PDCCH).

In one embodiment, the first DCI format is used to generate a PDCCH.

In one embodiment, the first DCI format comprises a payload bit or information bit of a PDCCH.

In one embodiment, the first DCI format comprises multiple fields, and the multiple fields comprised in the first DCI format comprises the first field.

In one embodiment, a Radio Network Temporary Identity (RNTI) scrambled by a CRC of a PDCCH carrying the first DCI format is a C-RNTI or an MCS-RNTI.

In one embodiment, an RNTI scrambling a CRC of a PDCCH carrying the first DCI format is a C-RNTI.

In one embodiment, an RNTI scrambling a CRC of a PDCCH carrying the first DCI format is a C-RNTI, an MCS-RNTI or an SP-CSI-RNTI.

In one embodiment, an RNTI scrambling a CRC of a PDCCH carrying the first DCI format is a CS-RNTI, a C-RNTI, an MCS-RNTI or an SP-CSI-RNTI.

In one embodiment, the first field is a "Precoding information and number of layers" field.

In one embodiment, the first field is a "Second Precoding information" field.

In one embodiment, the first field is an "Antenna ports" field.

In one embodiment, the first field is a "PTRS-DMRS association" field.

In one embodiment, the first field is a "DMRS sequence initialization" field.

In one embodiment, the first field is a field related to a demodulation reference signal of the first PUSCH.

In one embodiment, when the target size is greater than 0, the definition of the first field comprised in the first DCI format is related to the target waveform.

In one embodiment, the first field is used to explicitly or implicitly indicate a number of layer(s) occupied by the first PUSCH and an adopted transmitted precoding matrix indicator (TPMI).

In one embodiment, the first field is used to explicitly or implicitly indicate time-frequency-code domain resources occupied by a demodulation reference signal of the first PUSCH.

In one embodiment, the first field is used to explicitly or implicitly indicate a number of Code Division Multiplexing (CDM) group(s) corresponding to a demodulation reference signal of the first PUSCH and a demodulation reference signal port to which it belongs.

In one embodiment, the first field is used to explicitly or implicitly indicate at least one of a number of CDM group(s) corresponding to a demodulation reference signal of the first PUSCH, a demodulation reference signal port to which it belongs, an initial value of an adopted scrambling sequence or a number of occupied front-load time-domain symbol(s).

In one embodiment, the first field is used to explicitly or implicitly indicate an association relation of a phase tracking reference signal (PTRS) and a demodulation reference signal of the first PUSCH.

In one embodiment, the first field is used to explicitly or implicitly indicate an initialization of a generation sequence of a demodulation reference signal for the first PUSCH

In one embodiment, the first field comprises at least one padding bit.

In one embodiment, the first field does not comprise any padding bit.

In one embodiment, the first field is neither a starting field nor an end field comprised in the first DCI format.

In one embodiment, the first DCI format comprises the second field.

In one embodiment, the first DCI format does not comprise the second field.

In one embodiment, the second field only comprises 1 bit.

In one embodiment, the second field comprises multiple bits.

In one embodiment, the second field is a newly introduced field in version 18 (Rel 18).

In one embodiment, the second field is an existing field in version 17 (Rel 17) or previous versions.

In one embodiment, the second field is a field obtained after re-interpreting existing fields in Rel 17 or previous versions.

In one embodiment, the definition of the second field is related to version.

In one embodiment, the definition of the second field is unrelated to version.

In one embodiment, the second field is a "transform precoder indicator" field.

In one embodiment, the second field is a "waveform indicator" field.

In one embodiment, the second field is a "CP-OFDM/DFT-s-OFDM indicator" field.

In one embodiment, locations of the first field and the second field in the first DCI format are different.

In one embodiment, the first field and the second field comprise different information bits in the first DCI format.

In one embodiment, the first field and the second field are two fields with different types.

In one embodiment, locations of the first field and the second field in the first DCI format are adjacent.

In one embodiment, locations of the first field and the second field in the first DCI format are not adjacent.

In one embodiment, the first PUSCH is a dynamically-scheduled PUSCH.

In one embodiment, the first PUSCH is a configured grant (CG) PUSCH.

In one embodiment, the first PUSCH is a Type 1 CG PUSCH.

In one embodiment, the first PUSCH is a Type 2 CG PUSCH.

In one embodiment, the first PUSCH carries Uplink Control Information (UCI).

In one embodiment, the first PUSCH does not carry UCI.

In one embodiment, the first PUSCH carries an Uplink shared channel (UL-SCH).

In one embodiment, the first PUSCH does not carry a UL-SCH.

In one embodiment, the first PUSCH is a baseband signal of a PUSCH.

In one embodiment, the first PUSCH is an RF signal of a PUSCH.

In one embodiment, the technical feature that "a waveform adopted for the first PUSCH is a target waveform" includes the following meaning: the target waveform is used for a transmission of the first PUSCH.

In one embodiment, the technical feature that "a waveform adopted for the first PUSCH is a target waveform" includes the following meaning: the target waveform is used for generating a baseband signal or RF signal of the first PUSCH.

In one embodiment, the technical feature that "a waveform adopted for the first PUSCH is a target waveform" includes the following meaning: the first PUSCH adopts the target waveform for transmission.

In one embodiment, the technical feature that "a waveform adopted for the first PUSCH is a target waveform" includes the following meaning: the first PUSCH adopts a transform precoder (on or off) corresponding to the target waveform.

In one embodiment, the technical feature that "a waveform adopted for the first PUSCH is a target waveform" includes the following meaning: a modulation symbol used to generate the first PUSCH adopts the target waveform to generate a baseband signal or an RF (radio frequency) signal of the first PUSCH.

In one embodiment, the technical feature that "a waveform adopted for the first PUSCH is a target waveform" includes the following meaning: a type of OFDM corresponding to the target waveform is used to generate a baseband signal or an RF signal of the first PUSCH.

In one embodiment, the technical feature that "a waveform adopted for the first PUSCH is a target waveform" includes the following meaning: an uplink transmission waveform adopted (or configured) by a transmitter of the first PUSCH is the target waveform.

In one embodiment, "a CP-OFDM waveform" and "transform precoding (or transform precoder) being disabled" are equivalent or interchangeable.

In one embodiment, "a DFT-s-OFDM waveform" and "transform precoding (or transform precoder) being enabled" are equivalent or interchangeable.

In one embodiment, "a CP-OFDM waveform" and "transform precoding (or transform precoder) performing DFT spreading being disabled" are equivalent or interchangeable.

In one embodiment, "a DFT-s-OFDM waveform" and "transform precoding (or transform precoder) performing DFT spreading being enabled" are equivalent or interchangeable.

In one embodiment, "the target waveform being CP-OFDM" and "transform precoding (or transform precoder) in the generation of the first PUSCH being disabled" are equivalent or interchangeable.

In one embodiment, "the target waveform being DFT-s-OFDM" and "transform precoding (or transform precoder) in the generation of the first PUSCH being enabled" are equivalent or interchangeable.

In one embodiment, the target waveform is OFDM using CP with switchable transform precoding.

In one embodiment, the target waveform is generated through Inverse Discrete Fourier Transform (IDFT) or Inverse Fast Fourier Transform (IFFT) at baseband.

In one embodiment, the target waveform is generated through precoding transform and OFDM.

In one embodiment, the target waveform is a Cyclic Prefix Orthogonal Frequency Division Multiplexing (CP-OFDM), or the target waveform is a Discrete Fourier Transform Prepare Orthogonal Frequency Division Multiplexing (DFT-S-OFDM).

In one embodiment, the target waveform is a Single Carrier Frequency Division Multiple Access (SC-FDMA), or target waveform is a Circularly Pulse Shaped-Orthogonal Frequency Division Multiplexing (CPS-OFDM), or target waveform is a Filter Bank-Orthogonal Frequency Division Multiplexing (FB-OFDM).

In one embodiment, the target waveform is one of Cyclic Prefix Less Precoded OFDM (CPLP-OFDM), a Flexibly Configured OFDM (FC-OFDM), Flexible CP-OFDM (FCP-OFDM), Flexi-OFDM, Unique Word Discrete Fourier Transform spread Orthogonal Frequency Division Multiplexing (UW DFT-S-OFDM), Orthogonal Time Frequency Space (OTFS), Windowed OFDM (W-OFDM), and Filtered OFDM (F-OFDM).

In one embodiment, the target waveform is generated through windowing on the basis of OFDM.

In one embodiment, the target waveform is generated through Filtering on the basis of OFDM.

In one embodiment, X1 is equal to 2.

In one embodiment, X1 is greater than 2.

In one embodiment, the X1 candidate waveforms are X1 waveforms in CP-OFDM, DFT-S-OFDM, CPS-OFDM, FB-OFDM, CPLP-OFDM, FC-OFDM, FCP-OFDM, Flexi-OFDM, UW DFT-S-OFDM, OTFS, W-OFDM and F-OFDM.

In one embodiment, X1 is equal to 2, and the X1 candidate waveforms are respectively CP-OFDM and DFT-S-OFDM.

In one embodiment, X1 is equal to 2, and the X1 candidate waveforms are respectively OFDM with transform precoding (or transform precoder) disabled and OFDM with transform precoding (or transform precoder) enabled.

In one embodiment, X1 is equal to 2, and the X1 candidate waveforms are respectively OFDM using a CP with transform precoding (or transform precoder) performing DFT spreading disabled and OFDM using a CP with transform precoding (or transform precoder) performing DFT spreading enabled.

In one embodiment, X1 is equal to 2, and the X1 candidate waveforms respectively correspond to transform precoding (or transform precoder) performing DFT spreading being disabled and enabled.

In one embodiment, X1 is equal to 2, the X1 candidate waveforms are respectively transform precoding (or transform precoder) using an execution of DFT spreading and transform precoding (or transform precoder) not using an execution of DFT spreading.

In one embodiment, X1 is equal to 3, and the X1 candidate waveforms are respectively CP-OFDM, DFT-S-OFDM, and OTFS.

In one embodiment, X1 is equal to 3, and the X1 candidate waveforms are respectively CP-OFDM, DFT-S-OFDM, and Flexi-OFDM.

In one embodiment, X1 is equal to 4, and the X1 candidate waveforms are respectively CP-OFDM, DFT-S-OFDM, OTFS, and Flexi-OFDM.

In one embodiment, the X1 candidate waveforms are pre-defined.

In one embodiment, the X1 candidate waveforms are fixed.

In one embodiment, the X1 candidate waveforms are hard coded in the protocol.

In one embodiment, the X1 candidate waveforms are signaling-configured.

In one embodiment, the technical feature that "the second field comprised in the first DCI format being used to determine the target waveform from the X1 candidate waveforms" includes the following meaning: the second field comprised in the first DCI format is used by the first node in the present application to determine the target waveform from the X1 candidate waveforms.

In one embodiment, the technical feature that "the second field comprised in the first DCI format being used to determine the target waveform from the X1 candidate waveforms" includes the following meaning: the second field comprised in the first DCI format is used to explicitly or implicitly indicate the target waveform from the X1 candidate waveforms.

In one embodiment, the technical feature of "the second field comprised in the first DCI format is used to determine the target waveform out of the X1 candidate waveforms" and "the second field comprised in the first DCI format is used to explicitly or implicitly indicate whether to adopt transform precoding (transform precoder)" are equivalent or interchangeable.

In one embodiment, the technical feature of "the second field comprised in the first DCI format is used to determine the target waveform out of the X1 candidate waveforms" and "the second field comprised in the first DCI format is used to explicitly or implicitly indicate a switch of transform precoding (transform precoder)" are equivalent or interchangeable.

In one embodiment, the technical feature that "the second field comprised in the first DCI format being used to determine the target waveform from the X1 candidate waveforms" includes the following meaning: when a value of the second field comprised in the first DCI format is equal to a value, the target waveform is one of the X1 candidate waveforms; when a value of the second field comprised in the first DCI format is equal to another value, the target waveform is another one of the X1 candidate waveforms.

In one embodiment, the technical feature that "the second field comprised in the first DCI format being used to determine the target waveform from the X1 candidate waveforms" includes the following meaning: when a value of the second field comprised in the first DCI format is equal to a value, transform precoding (transform precoder) is enabled; when a value of the second field comprised in the first DCI format is equal to another value, transform precoding (transform precoder) is disabled.

In one embodiment, the technical feature that "the second field comprised in the first DCI format being used to determine the target waveform from the X1 candidate waveforms" includes the following meaning: a value of the second field comprised in the first DCI format is equal to one of X1 candidate values, and the X1 candidate values respectively correspond the X1 candidate waveforms, the target waveform is a candidate waveform corresponding to a value of the second field comprised in the first DCI format.

In one embodiment, when the first DCI format does not comprise the second field, all or part of the first information block is used to explicitly or implicitly indicate the target waveform from the X1 candidate waveforms.

In one embodiment, when the first DCI format does not comprise the second field, all or part comprised the first information block is used to explicitly or implicitly indicate a switch of transform precoding (transform precoder) in the generation of the first PUSCH.

In one embodiment, when the first DCI format does not comprise the second field, whether transform precoding (transform precoder) in the generation of the first PUSCH is enabled/disabled (on/off) follows a value of at least one parameter comprised in the first information block.

In one embodiment, when the first DCI format does not comprise the second field, higher-layer parameter "msg3-transformPrecoder" is used to explicitly or implicitly indicate the target waveform from the X1 candidate waveforms.

In one embodiment, when the first DCI format does not comprise the second field, higher-layer parameter "msg3-transformPrecoder" is used to explicitly or implicitly indicate a switch of transform precoding (transform precoder) in the generation of the first PUSCH.

In one embodiment, when the first DCI format does not comprise the second field, whether transform precoding (transform precoder) in the generation of the first PUSCH is enabled/disabled (on/off) follows a value of higher-layer parameter "msg3-transformPrecoder".

In one embodiment, when the first DCI format does not comprise the second field, higher-layer parameter "transformPrecoder" in IE "UplinkConfig" is used to explicitly or implicitly indicate the target waveform from the X1 candidate waveforms.

In one embodiment, when the first DCI format does not comprise the second field, higher-layer parameter "transformPrecoder" in IE "UplinkConfig" is used to explicitly or implicitly indicate a switch of transform precoding (transform precoder) in the generation of the first PUSCH.

In one embodiment, when the first DCI format does not comprise the second field, whether transform precoding (transform precoder) in the generation of the first PUSCH is enabled/disabled (on/off) follows a value of higher-layer parameter "transformPrecoder" in IE "UplinkConfig".

In one embodiment, when the first DCI format does not comprise the second field and when higher-layer parameter "transformPrecoder" in IE "UplinkConfig" is provided or configured, higher-layer parameter "transformPrecoder" in IE "UplinkConfig" is used to explicitly or implicitly indicate the target waveform from the X1 candidate waveforms; when the first DCI format does not comprise the second field and when higher-layer parameter "transformPrecoder" in IE "UplinkConfig" is not provided or configured, higher-layer parameter "msg3-transformPrecoder" is used to explicitly or implicitly indicate the target waveform from the X1 candidate waveforms.

In one embodiment, when the first DCI format does not comprise the second field and when higher-layer parameter "transformPrecoder" in IE "UplinkConfig" is provided or configured, higher-layer parameter "transformPrecoder" in IE "UplinkConfig" is used to explicitly or implicitly indicate a switch of transform precoding (transform precoder) in the generation of the first PUSCH; when the first DCI format does not comprise the second field and higher-layer parameter "transformPrecoder" in IE "UplinkConfig" is not provided or configured, higher-layer parameter "msg3-transformPrecoder" is used to explicitly or implicitly indicate a switch of transform precoding (transform precoder) in the generation of the first PUSCH.

In one embodiment, a size of the first field comprised in the first DCI format is a number of bit(s) comprised in the first field in the first DCI format.

In one embodiment, a size of the first field comprised in the first DCI format is a number of information bit(s) comprised in the first field in the first DCI format.

In one embodiment, a size of the first field comprised in the first DCI format is the bitwidth of the first field in the first DCI format.

In one embodiment, a size of the first field comprised in the first DCI format is a number of non-padding bit(s) comprised in the first field in the first DCI format.

In one embodiment, a size of the first field comprised in the first DCI format is a total number of non-padding bit(s) and padding bit(s) comprised in the first field in the first DCI format.

In one embodiment, the target size can be equal to 0.

In one embodiment, the target size can be greater than 0.

In one embodiment, the X2 candidate sizes are pre-defined.

In one embodiment, the X2 candidate sizes are signaling-configured.

In one embodiment, the X2 candidate sizes are related to a type of the first field.

In one embodiment, the X2 candidate sizes are pre-defined for the first field.

In one embodiment, at least one candidate size in the X2 candidate sizes is equal to 0.

In one embodiment, each one of the X2 candidate sizes is greater than 0.

In one embodiment, each one of the X2 candidate sizes is a value of a number of bit(s).

In one embodiment, X2 is equal to 2.

In one embodiment, X2 is greater than 2.

In one embodiment, X2 is related to a type (definition) of the first field.

In one embodiment, X2 and X1 are equal.

In one embodiment, X2 and X1 are not equal.

In one embodiment, X2 is greater than the X1.

In one embodiment, X2 is less than the X1.

In one embodiment, when X2 is equal to 2, the X2 candidate sizes are equal to 0 and 1, respectively.

In one embodiment, when X2 is equal to 2, the X2 candidate sizes are equal to 0 and 2, respectively.

In one embodiment, when X2 is equal 7, the X2 candidate sizes are 0, 1, 2, 3, 4, 5, and 6, respectively.

In one embodiment, when X2 is equal 6, the X2 candidate sizes are 0, 1, 2, 3, 4, and 5, respectively.

In one embodiment, when X2 is equal 5, the X2 candidate sizes are 0, 2, 3, 4, and 5, respectively.

In one embodiment, when X2 is equal 4, the X2 candidate sizes are 2, 3, 4, and 5, respectively.

In one embodiment, each one of the X1 candidate waveforms only corresponds to one of the X2 candidate sizes.

In one embodiment, one of the X1 candidate waveforms corresponds to multiple candidate sizes in the X2 candidate sizes.

In one embodiment, each one of the X1 candidate waveforms corresponds to at least one of the X2 candidate sizes.

In one embodiment, a candidate size of each one of the X2 candidate sizes corresponding to each one of the X1 candidate waveforms is a possible size of the first field.

In one embodiment, a candidate size of each one of the X2 candidate waveforms corresponding to each one of the X1 candidate sizes is a possible size of the first field for the candidate waveform.

In one embodiment, a candidate size of each one of the X2 candidate waveforms corresponding to each one of the X1 candidate sizes is a possible size of the first field when a PUSCH using the candidate waveform is scheduled.

In one embodiment, the technical feature that "the target size is equal to a maximum candidate size of candidate sizes corresponding to the X1 candidate waveforms among the X2 candidate sizes" includes the following meaning: the X1 candidate waveforms respectively correspond to X1 candidate sizes, and each one of the X1 candidate sizes is one of the X2 candidate sizes; the target size is equal to a maximum value among the X1 candidate sizes.

In one embodiment, the technical feature that "the target size is equal to a maximum candidate size of candidate sizes corresponding to the X1 candidate waveforms among the X2 candidate sizes" includes the following meaning: the X1 candidate waveforms respectively correspond to X1 candidate sizes, and each one of the X1 candidate sizes is one of the X2 candidate sizes, the X1 candidate sizes are possible sizes of the first field respectively for the X1 candidate waveforms in the case of configuration parameters other than a given waveform; the target size is equal to a maximum value in the X1 candidate sizes.

In one embodiment, the technical feature that "the target size is equal to a maximum candidate size of candidate sizes corresponding to the X1 candidate waveforms among the X2 candidate sizes" includes the following meaning: a characteristic waveform is one of the X1 candidate waveforms, a size of the first field for the characteristic waveform is larger than a size of the first field for any other candidate waveform among the X1 candidate waveforms, the target size is equal to a size of the first field for the characteristic waveform. In one subsidiary embodiment of the above embodiment, the characteristic waveform is CP-OFDM. In one subsidiary embodiment of the above embodiment, the characteristic waveform is DFT-s-OFDM. In one subsidiary embodiment of the above embodiment, the characteristic waveform is OFDM with transform precoding disabled. In one subsidiary embodiment of the above embodiment, the characteristic waveform is OFDM with transform precoding enabled.

In one embodiment, the technical feature that "the target size is equal to a maximum candidate size of candidate sizes corresponding to the X1 candidate waveforms among the X2 candidate sizes" includes the following meaning: a characteristic waveform is one of the X1 candidate waveforms, in the case of other parameters are given, a size of the first field for the characteristic waveform is larger than a size of the first field for any other candidate waveform among the X1 candidate waveforms; the target size is equal to a size of the first field for the characteristic waveform. In one subsidiary embodiment of the above embodiment, the characteristic waveform is CP-OFDM. In one subsidiary embodiment of the above embodiment, the characteristic waveform is DFT-s-OFDM. In one subsidiary embodiment of the above embodiment, the characteristic waveform is OFDM with transform precoding disabled. In one subsidiary embodiment of the above embodiment, the characteristic waveform is OFDM with transform precoding enabled.

In one embodiment, the technical feature that "the target size is equal to a maximum candidate size of candidate sizes corresponding to the X1 candidate waveforms among the X2 candidate sizes" includes the following meaning: the target size is equal to a maximum candidate size among candidate sizes corresponding to the X1 candidate waveforms among the X2 candidate sizes in case of a given parameter value set, and any given parameter value comprised in the given parameter value set is a parameter value other than a waveform.

In one embodiment, the technical feature that "the target size is equal to a maximum candidate size of candidate sizes corresponding to the X1 candidate waveforms among the X2 candidate sizes" includes the following meaning: the target size is equal to a maximum candidate size among candidate sizes corresponding to the X1 candidate waveforms among the X2 candidate sizes in the case of a given parameter value set, and the given parameter value set comprises at least one of transmission scheme (codebook based or non-codebook based transmission), full power mode, maximum rank, codebook subset, demodulation reference signal type, maximum length of a demodulation reference signal, modulation encoding method, SRS resource indication value.

In one embodiment, the technical feature that "the target size is equal to a maximum candidate size of candidate sizes corresponding to the X1 candidate waveforms among the X2 candidate sizes" includes the following meaning: the target size is equal to a size of the first field obtained by a candidate waveform that results in a largest size of the first field among the X1 candidate waveforms.

In one embodiment, the technical feature that "the target size is equal to a maximum candidate size of candidate sizes corresponding to the X1 candidate waveforms among the X2 candidate sizes" includes the following meaning: the X2 candidate sizes respectively correspond to X2 parameter value groups, each one of the X2 parameter value groups comprises at least one parameter value, and at least one of the X2 parameter value combinations comprises a candidate waveform parameter value; in the case where all parameter values other than candidate waveform parameter values comprised in the X2 parameter value combinations are given, a maximum value of a parameter value combination comprising candidate waveform parameter values in the X2 parameter value combinations in all candidate sizes corresponding to the X2 candidate sizes.

In one embodiment, the technical feature that "the target size is equal to a maximum candidate size of candidate sizes corresponding to the X1 candidate waveforms among the X2 candidate sizes" includes the following meaning: the target size is equal to a maximum candidate size in all candidate sizes corresponding to the X1 candidate waveforms among the X2 candidate sizes.

In one embodiment, the technical feature that "the target size is equal to a maximum candidate size of candidate sizes corresponding to the X1 candidate waveforms among the X2 candidate sizes" includes the following meaning: the target size is equal to a size of the first field assuming that the target waveform is DFT-s-OFDM.

In one embodiment, the technical feature that "the target size is equal to a maximum candidate size of candidate sizes corresponding to the X1 candidate waveforms among the X2 candidate sizes" includes the following meaning: the target size is equal to a size of the first field for DFT-s-OFDM.

In one embodiment, the technical feature that "the target size is equal to a maximum candidate size of candidate sizes corresponding to the X1 candidate waveforms among the X2 candidate sizes" includes the following meaning: the target size is equal to a size of the first field when transform precoding (or transform precoder) is enabled.

In one embodiment, the technical feature that "the target size is equal to a maximum candidate size of candidate sizes corresponding to the X1 candidate waveforms among the X2 candidate sizes" includes the following meaning: the target size is equal to a size of the first field assuming that the target waveform is CP-OFDM.

In one embodiment, the technical feature that "the target size is equal to a maximum candidate size of candidate sizes corresponding to the X1 candidate waveforms among the X2 candidate sizes" includes the following meaning: the target size is equal to a size of the first field for CP-OFDM.

In one embodiment, the technical feature that "the target size is equal to a maximum candidate size of candidate sizes corresponding to the X1 candidate waveforms among the X2 candidate sizes" includes the following meaning: the target size is equal to a size of the first field when transform precoding (or transform precoder) is disabled.

In one embodiment, a size of the first field when transform precoding (or transform precoder) is disabled is always not less than a size of the first field when transform precoding (or transform precoder) is enabled.

In one embodiment, a size of the first field when transform precoding (or transform precoder) is disabled is always not greater than a size of the first field when transform precoding (or transform precoder) is enabled.

In one embodiment, a size of the first field for CP-OFDM is always not less than a size of the first field for DFT-s-OFDM.

In one embodiment, a size of the first field for CP-OFDM is always not greater than a size of the first field for DFT-s-OFDM.

In one embodiment, a size of the first field respectively for two different candidate waveforms among the X1 candidate waveforms is not equal, and "0" bit or "1" bit are added to the first field with a smaller size until a size of the first

13

field for any two of the X1 candidate waveforms is equal.

In one embodiment, for a size of the first field of one of the X1 candidate waveforms not being equal to a size of the first field of another one of the X1 candidate waveforms, at least one MSB equal to "0" is added in the first field with a smaller size, until a size of the first field for any two of the X1 candidate waveforms is equal.

In one embodiment, for a size of the first field of one of the X1 candidate waveforms not being equal to a size of the first field of another one of the X1 candidate waveforms, at least one MSB equal to "1" is added in the first field with a smaller size, until a size of the first field for any two of the X1 candidate waveforms is equal.

In one embodiment, for a size of the first field of one of the X1 candidate waveforms not being equal to a size of the first field of another one of the X1 candidate waveforms, at least one Least Significant bit (LSB) equal to "0" is added in the first field with a smaller size, until a size of the first field for any two of the X1 candidate waveforms is equal.

In one embodiment, for a size of the first field of one of the X1 candidate waveforms not being equal to a size of the first field of another one of the X1 candidate waveforms, at least one Least Significant bit (LSB) equal to "1" is added in the first field with a smaller size, until a size of the first field for any two of the X1 candidate waveforms is equal.

In one embodiment, when the first DCI format comprises the second field and for a size of the first field of one of the X1 candidate waveforms not being equal to a size of the first field of another one of the X1 candidate waveforms, at least one MSB equal to "0" is added in the first field with a smaller size, until a size of the first field for any two of the X1 candidate waveforms is equal.

In one embodiment, when the first DCI format comprises the second field and for a size of the first field of one of the X1 candidate waveforms not being equal to a size of the first field of another one of the X1 candidate waveforms, at least one MSB equal to "1" is added in the first field with a smaller size, until a size of the first field for any two of the X1 candidate waveforms is equal.

In one embodiment, when the first DCI format comprises the second field and for a size of the first field of one of the X1 candidate waveforms not being equal to a size of the first field of another one of the X1 candidate waveforms, at least one Least Significant bit (LSB) equal to "0" is added in the first field with a smaller size, until a size of the first field for any two of the X1 candidate waveforms is equal.

In one embodiment, when the first DCI format comprises the second field and for a size of the first field of one of the X1 candidate waveforms not being equal to a size of the first field of another one of the X1 candidate waveforms, at least one Least Significant bit (LSB) equal to "1" is added in the first field with a smaller size, until a size of the first field for any two of the X1 candidate waveforms is equal.

In one embodiment, whether the first DCI format comprises the second field is related to at least one capability parameter of a transmitter of the first PUSCH.

In one embodiment, at least one capability parameter of a transmitter of the first PUSCH is used to determine whether the first DCI format comprises the second field.

In one embodiment, at least one capability parameter of a transmitter of the first PUSCH is used to determine whether a dynamic switch of transform precoding (or transform precoder) is supported, and whether the first DCI format comprises the second field is related to whether a dynamic switch of transform precoding (or transform precoder) is supported.

In one embodiment, at least one capability parameter of a transmitter of the first PUSCH is used to determine whether a dynamic switching of uplink transmission waveform is supported, and whether the first DCI format comprises the second field is related to whether a dynamic switching of uplink transmission waveform is supported.

In one embodiment, a transmitter of the first PUSCH is the first node in the present application.

## Embodiment 2

Embodiment 2 illustrates a schematic diagram of a network architecture according to the present application, as shown in FIG. 2. FIG. 2 illustrates a network architecture 200 of 5G NR, Long-Term Evolution (LTE) and Long-Term Evolution Advanced (LTE-A) systems. The 5G NR or LTE network architecture 200 may be called a 5G System (5GS)/Evolved Packet System (EPS) 200 or other appropriate terms. The 5GS/EPS 200 may comprise one or more UEs 201, an NG-RAN 202, a 5G Core Network/Evolved Packet Core (5GC/EPC) 210, a Home Subscriber Server (HSS)/ Unified Data Management (UDM) 220 and an Internet Service 230. The 5GS/EPS 200 may be interconnected with other access networks. For simple description, the entities/interfaces are not shown. As shown in FIG. 2, the 5GS/EPS 200 provides packet switching services. Those skilled in the art will readily understand that various concepts presented throughout the present application can be extended to networks providing circuit switching services or other cellular networks. The NG-RAN comprises an NR/evolved node B (gNB/eNB) 203 and other gNBs (eNBs) 204. The gNB(eNB) 203 provides UE 201-oriented user plane and control plane protocol terminations. The gNB(eNB) 203 may be connected to other gNBs (eNBs) 204 via an Xn/X2 interface (e.g., backhaul). The gNB(eNB) 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB(eNB) 203 provides an access point of the 5GC/EPC 210 for the UE 201. Examples of the UE 201 include cellular phones, smart phones, Session Initiation Protocol (SIP) phones, laptop computers, Personal Digital Assistant (PDA), satellite Radios, non-terrestrial base station communications, Satellite Mobile Communications, Global Positioning Systems (GPS), multimedia devices, video devices, digital audio players (for example, MP3 players), cameras, game consoles, unmanned aerial vehicles (UAV), aircrafts, narrow-band Internet of Things (IoT) devices, machine-type communication devices, land vehicles, automobiles, wearable devices, or any other similar functional devices. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB(eNB) 203 is connected to the 5GC/EPC 210 via an S1/NG interface. The 5GC/EPC 210 comprises a Mobility Management Entity (MME)/ Authentication Management Field (AMF)/ Session Management Function (SMF) 211, other MMEs/ AMFs/ SMFs 214, a Service Gateway (S-GW)/ User Plane Function (UPF) 212 and a Packet Date Network Gateway (P-GW)/UPF 213. The MME/AMF/SMF 211 is a control node for processing a signaling between the UE 201 and the 5GC/EPC 210. Generally, the MME/AMF/SMF 211 provides bearer and connection management. All user Internet Protocol (IP) packets are transmitted through the S-GW/UPF 212, the S-GW/UPF 212 is connected to the P-GW/UPF 213. The P-GW provides UE IP address allocation and other functions. The P-GW/UPF 213 is connected to the Internet Service 230. The Internet Service 230 comprises IP services corresponding to operators, specifically including Internet, Intranet, IP Multimedia Subsystem (IMS) and Packet Switching Streaming Services (PSS).

In one embodiment, the UE 201 corresponds to the first node in the present application.

In one embodiment, the gNB(eNB) 201 corresponds to the second node in the present application.

## Embodiment 3

Embodiment 3 illustrates a schematic diagram of an example of a radio protocol architecture of a user plane and a control plane according to one embodiment of the present application, as shown in FIG. 3. FIG. 3 is a schematic diagram illustrating an embodiment of a radio protocol architecture of a user plane 350 and a control plane 300. In FIG. 3, the radio protocol architecture for a first node (UE or gNB) and a second node (gNB or UE) is represented by three layers, which are a layer 1, a layer 2 and a layer 3, respectively. The layer 1 (L1) is the lowest layer and performs signal processing functions of various PHY layers. The L1 is called PHY 301 in the present application. The layer 2 (L2) 305 is above the PHY 301, and is in charge of the link between the first node and the second node via the PHY 301. L2 305 comprises a Medium Access Control (MAC) sublayer 302, a Radio Link Control (RLC) sublayer 303 and a Packet Data Convergence Protocol (PDCP) sublayer 304. All the three sublayers terminate at the second node. The PDCP sublayer 304 provides multiplexing among variable radio bearers and logical channels. The PDCP sublayer 304 provides security by encrypting a packet and provides support for a first node handover between second nodes. The RLC sublayer 303 provides segmentation and reassembling of a higher-layer packet, retransmission of a lost packet, and reordering of a data packet so as to compensate the disordered receiving caused by HARQ. The MAC sublayer 302 provides multiplexing between a logical channel and a transport channel. The MAC sublayer 302 is also responsible for allocating between first nodes various radio resources (i.e., resource block) in a cell. The MAC sublayer 302 is also in charge of HARQ operation. The Radio Resource Control (RRC) sublayer 306 in layer 3(L3) of the control plane 300 is responsible for acquiring radio resources (i.e., radio bearer) and configuring the lower layer with an RRC signaling between a second node and a first node. The radio protocol architecture of the user plane 350 comprises layer 1 (L1) and layer 2 (L2). In the user plane 350, the radio protocol architecture for the first node and the second node is almost the same as the corresponding layer and sublayer in the control plane 300 for physical layer 351, PDCP sublayer 354, RLC sublayer 353 and MAC sublayer 352 in L2 layer 355, but the PDCP sublayer 354 also provides a header compression for a higher-layer packet so as to reduce a radio transmission overhead. The L2 layer 355 in the user plane 350 also includes Service Data Adaptation Protocol (SDAP) sublayer 356, which is responsible for the mapping between QoS flow and Data Radio Bearer (DRB) to support the diversity of traffic. Although not described in FIG. 3, the first node may comprise several higher layers above the L2 layer 355, such as a network layer (e.g., IP layer) terminated at a P-GW of the network side and an application layer terminated at the other side of the connection (e.g., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

## Embodiment 4

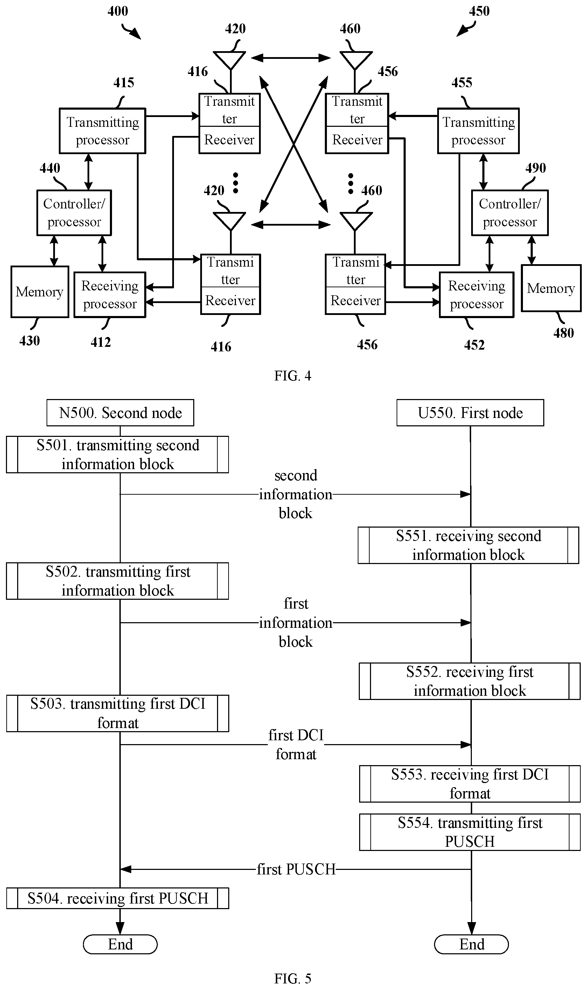

Embodiment 4 illustrates a schematic diagram of a first node and a second node according to one embodiment of the present application, as shown in FIG. 4.

The first node (450) may comprise a controller/processor 490, a data source/buffer 480, a receiving processor 452, a transmitter/receiver 456 and a transmitting processor 455, wherein the transmitter/receiver 456 comprises an antenna 460.

The second node (410) may comprise a controller/processor 440, a data source/buffer 430, a receiving processor 412, a transmitter/receiver 416 and a transmitting processor 415, wherein the transmitter/receiver 416 comprises an antenna 420.

In downlink (DL), a higher-layer packet, such as higher-layer information comprised in a first information block and a second information block in the present application, is provided to the controller/ processor 440. The controller/-processor 440 implements the functionality of the L2 layer and the higher layer. In DL transmission, the controller/processor 440 provides header compression, encryption, packet segmentation and reordering and multiplexing between a logical channel and a transport channel, as well as radio resource allocation for the first node 450 based on varied priorities. The controller/processor 440 is also in charge of HARQ operation, retransmission of a lost packet, and a signaling to the first node 450, for instance, higher-layer information comprised in the first information block and the second information block in the present application are all generated in the controller/processor 440. The transmitting processor 415 provides various signal processing functions for the L1 layer (that is, PHY), including coding, interleaving, scrambling, modulating, power control/allocation, precoding and generation of physical-layer control signaling, such as generation of a physical-layer signal carrying the first information block and the second information block and the generation of a physical-layer signal carrying the first DCI format is completed at the transmitter 415. The generated modulation symbols are divided into parallel streams and each stream is mapped onto a corresponding multicarrier subcarrier and/or a multicarrier symbol, which is later mapped from the transmitting processor 415 to the antenna 420 via the transmitter 416 in the form of a radio frequency signal. At the receiving side, each receiver 456 receives an RF signal via a corresponding antenna 460, each receiver 456 recovers baseband information modulated to the RF carrier and provides the baseband information to the receiving processor 452. The receiving processor 452 provides various signal receiving functions for the L1 layer. The signal receiving and processing functions include reception of physical-layer signals carrying the first information block and the second information block in the present application and the physical-layer signal carrying the first DCI format, demodulation of multicarrier symbols in multicarrier symbol streams based on each modulation scheme (e.g., BPSK, QPSK), and then descrambling, decoding and de-interleaving of the demodulated symbols so as to recover data or control signals transmitted by the second node 410 on a physical channel, and the data or control signals are later provided to the controller/processor 490. The controller/processor 490 is in charge of the function of L2 layer and above layers, and the controller/processor 490 interprets higher-layer information comprised in the first information block and the second information block in the present application. The controller/processor can be connected to a memory 480 that stores program code and data. The memory 480 may be called a computer readable medium.

In uplink (UL) transmission, similar to downlink transmission, the higher-layer information comprises the higher-layer information comprised in the first PUSCH in the present application (if the first PUSCH comprises higher-layer information), which is generated by the controller/processor 490 and implemented by the transmitting processor 455 for various signal transmission processing functions for the L1 layer (i.e. physical layer), including the generation of the physical-layer signal carrying the first PUSCH, which is completed at the transmitting processor 455, and then mapped by the transmitting processor 455 to the antenna 460 via the transmitter 456 for transmission in the form of RF signals. The receiver 416 receives a radio-frequency signal via its corresponding antenna 420, and each receiver 416 recovers baseband information modulated to a radio-frequency carrier, and supplies the baseband information to the receiving processor 412. The receiving processor 412 implements various signal reception and processing functions for the L1 layer (i.e., the physical layer), including receiving and processing the physical-layer signal carrying the first PUSCH in the present application, and then providing data and/or control signals to the controller/processor 440. The function of implementing L2 layer in controller/processor 440 comprises interpreting higher layer information, comprising an interpretation of higher-layer information carried by the first PUSCH (if the first PUSCH carries higher-layer information). The controller/processor can be connected to a buffer 430 that stores program code and data. The buffer 430 is a computer readable medium.

In one embodiment, the first node 450 comprises at least one processor and at least one memory. The at least one memory comprises computer program codes; the at least one memory and the computer program codes are configured to be used in collaboration with the at least one processor. The first node 450 at least: receives a first information block and a first DCI format, the first DCI format at least comprises a first field, and the first information block is used to determine whether the first DCI format comprises a second field, and the first field and the second field comprised in the first DCI format are two different fields; transmits a first PUSCH, a waveform adopted by the first PUSCH is a target waveform, and the target waveform is one of X1 candidate waveforms, X1 being a positive integer greater than 1; when the first DCI format comprises the second field, the second field comprised in the first DCI format is used to determine the target waveform out of the X1 candidate waveforms; a target size is equal to a size of the first field comprised in the first DCI format, the target size is equal to one of X2 candidate sizes, and each one of the X2 candidate sizes is an integer equal to or greater than 0, X2 being a positive integer greater than 1; the target size is equal to a maximum candidate size of candidate sizes corresponding to the X1 candidate waveforms among the X2 candidate sizes.

In one embodiment, the first node 450 comprises a memory that stores a computer readable instruction program. The computer readable instruction program generates an action when executed by at least one processor. The action includes: receiving a first information block and a first DCI format, the first DCI format at least comprising a first field, the first information block being used to determine whether the first DCI format comprises a second field, the first field and the second field comprised in the first DCI format being two different fields; transmitting a first PUSCH, a waveform adopted by the first PUSCH being a target waveform, the target waveform being one of X1 candidate waveforms, X1 being a positive integer greater than 1; when the first DCI format comprises the second field, the second field comprised in the first DCI format is used to determine the target waveform out of the X1 candidate waveforms; a target size is equal to a size of the first field comprised in the first DCI format, the target size is equal to one of X2 candidate sizes, and each one of the X2 candidate sizes is an integer equal to or greater than 0, X2 being a positive integer greater than 1; the target size is equal to a maximum candidate size of candidate sizes corresponding to the X1 candidate waveforms among the X2 candidate sizes.

In one embodiment, the second node 410 comprises at least one processor and at least one memory. The at least one memory comprises computer program codes; the at least one memory and the computer program codes are configured to be used in collaboration with the at least one processor. The second node 410 at least: transmits a first information block and transmits a first DCI format, the first DCI format at least comprises a first field, and the first information block is used to determine whether the first DCI format comprises a second field, and the first field and the second field comprised in the first DCI format are two different fields; receives a first PUSCH, a waveform adopted by the first PUSCH is a target waveform, and the target waveform is one of X1 candidate waveforms, X1 being a positive integer greater than 1; when the first DCI format comprises the second field, the second field comprised in the first DCI format is used to determine the target waveform out of the X1 candidate waveforms; a target size is equal to a size of the first field comprised in the first DCI format, the target size is equal to one of X2 candidate sizes, and each one of the X2 candidate sizes is an integer equal to or greater than 0, X2 being a positive integer greater than 1; the target size is equal to a maximum candidate size of candidate sizes corresponding to the X1 candidate waveforms among the X2 candidate sizes.

In one embodiment, the second node device 410 comprises: a memory that stores a computer readable instruction program. The computer readable instruction program generates an action when executed by at least one processor. The action includes: transmitting a first information block and transmitting a first DCI format, the first DCI format at least comprising a first field, the first information block being used to determine whether the first DCI format comprises a second field, the first field and the second field comprised in the first DCI format being two different fields; receiving a first PUSCH, a waveform adopted by the first PUSCH being a target waveform, the target waveform being one of X1 candidate waveforms, X1 being a positive integer greater than 1; when the first DCI format comprises the second field, the second field comprised in the first DCI format is used to determine the target waveform out of the X1 candidate waveforms; a target size is equal to a size of the first field comprised in the first DCI format, the target size is equal to one of X2 candidate sizes, and each one of the X2 candidate sizes is an integer equal to or greater than 0, X2 being a positive integer greater than 1; the target size is equal to a maximum candidate size of candidate sizes corresponding to the X1 candidate waveforms among the X2 candidate sizes.

In one embodiment, the first node 450 is a UE.

In one embodiment, the second node 410 is a base station (gNB/eNB).

In one embodiment, the receiver 456 (including the antenna 460), the receiving processor 452 and the controller/processor 490 are used to receive the first information block in the present application.

In one embodiment, the receiver 456 (including the antenna 460) and the receiving processor 452 are used to receive a first DCI format in the present application.

In one embodiment, the transmitter 456 (including the antenna 460), the transmitting processor 455 and the controller/processor 490 are used to transmit the first PUSCH in the present application.

In one embodiment, the receiver 456 (including the antenna 460), the receiving processor 452 and the controller/processor 490 are used to receive the second information block in the present application.

In one embodiment, the transmitter 416 (including the antenna 420), the transmitting processor 415 and the controller/processor 440 are used to transmit the first information block in the present application.

In one embodiment, the transmitter 416 (including the antenna 420) and the transmitting processor 415 are used to transmit the first DCI format in the present application.

In one embodiment, the receiver 416 (including the antenna 420), the receiving processor 412 and the controller/processor 440 are used to receive the first PUSCH in the present application.

In one embodiment, the transmitter 416 (including the antenna 420), the transmitting processor 415 and the controller/processor 440 are used to transmit the second information block in the present application.

## Embodiment 5

Embodiment 5 illustrates a flowchart of a radio signal transmission according to one embodiment in the present application, as shown in FIG. 5. In FIG. 5, a second node N500 is a maintenance base station of a serving cell of a first node U550. It is particularly underlined that the order illustrated in the embodiment does not put constraints over sequences of signal transmissions and implementations.

**The second node N500** transmits a second information block in step S501, transmits a first information block in step S502, transmits a first DCI format in step S503, and receives a first PUSCH in step S504.

**The first node U550** receives a second information block in step S551, receives a first information block in step S552, receives a first DCI format in step S553, and transmits a first PUSCH in step S554.

In embodiment 5, the first DCI format at least comprises a first field, and the first information block is used to determine whether the first DCI format comprises a second field, and the first field and the second field comprised in the first DCI format are two different fields; a waveform adopted by the first PUSCH is a target waveform, and the target waveform is one of X1 candidate waveforms, X1 being a positive integer greater than 1; when the first DCI format comprises the second field, the second field comprised in the first DCI format is used to determine the target waveform out of the X1 candidate waveforms; a target size is equal to a size of the first field comprised in the first DCI format, the target size is equal to one of X2 candidate sizes, and each one of the X2 candidate sizes is an integer equal to or greater than 0, X2 being a positive integer greater than 1; the target size is equal to a maximum candidate size of candidate sizes corresponding to the X1 candidate waveforms among the X2 candidate sizes; the second information block is used to determine a reference waveform, and the reference waveform is one of the X1 candidate waveforms; when the first DCI format does not comprise the second field, the target waveform and the reference waveform are the same.

In one embodiment, the first information block is before the second information block.

In one embodiment, the first information block is after the second information block.

In one embodiment, the first information block and the second information block belong to a same IE.

In one embodiment, the first information block and the second information block respectively belong to two different IEs.

In one embodiment, the first information block and the second information block are transmitted through a same Physical Downlink Shared Channel (PDSCH).

In one embodiment, the second information is transmitted via an air interface or a radio interface.

In one embodiment, the second information block comprises all or part of a higher-layer signaling or physical-layer signaling.

In one embodiment, the second information block comprises all or part of a Radio Resource Control (RRC) layer signaling, or the second information block comprises all or part of a Medium Access Control (MAC) layer signaling.

In one embodiment, the second information block comprises all or part of a System Information Block (SIB).

In one embodiment, the second information block is UE-specific.

In one embodiment, the second information block is configured per carrier, or the second information block is configured per BWP, or the second information block is configured per band or per FR.

In one embodiment, the second information block comprises all or partial fields in a Downlink Control Information (DCI) format.

In one embodiment, the second information block comprises all or part in IE "PUSCH-Config"; or the second information block comprises all or part in IE "BWP-UplinkDedicated"; or the second information block comprises all or part in IE "BWP-Uplink"; or the second information block comprises all or part in IE "ServingCellConfig"; or the second information block comprises all or part in IE "UplinkConfig".

In one embodiment, the second information block comprises all or part in IE "ConfiguredGrantConfig".

In one embodiment, the second information block comprises all or part in IE "PTRS-UplinkConfig".

In one embodiment, the second information block comprises all or part in IE "PUSCH-ConfigCommon".

In one embodiment, the second information block comprises higher-layer parameter "msg3-transformPrecoder" or "msgA-TransformPrecoder".

In one embodiment, the second information block comprises higher-layer parameter "transformPrecoder".

## Embodiment 6

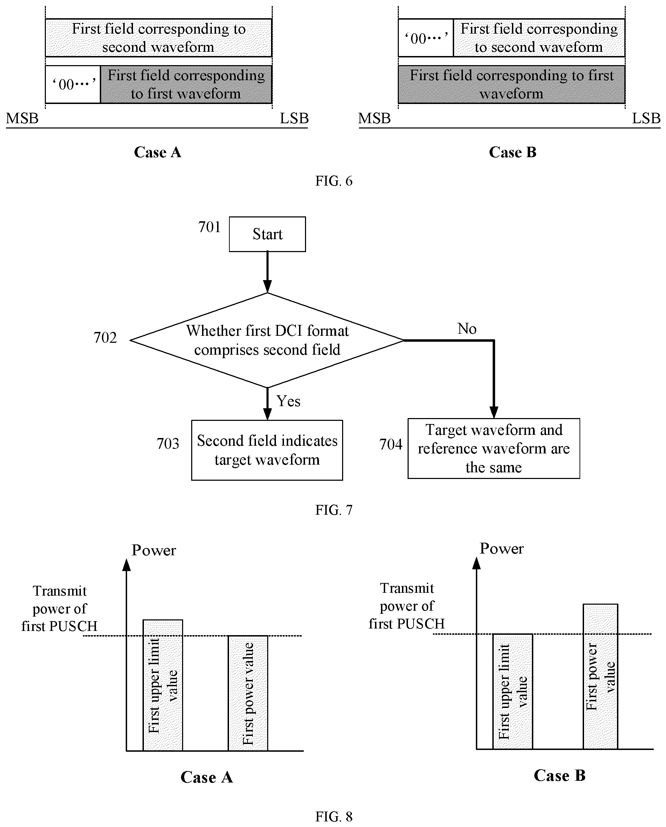

Embodiment 6 illustrates a schematic diagram of a first field according to one embodiment of the present application, as shown in FIG. 6. In FIG. 6, in cases A and B, to the left is a direction of an MSB of the first field, and to the right is a direction of an LSB (least significant bit) of the first field; in case A, a size of a first field corresponding to a first waveform is less than a size of a first field corresponding to a second waveform; in case B, a size of a first field corresponding to a first waveform is greater than a size of a first field corresponding to a second waveform.

In embodiment 6, a first waveform and a second waveform are respectively two different candidate waveforms among the X1 candidate waveforms in the present application, and a size of the first field in the present application corresponding to the first waveform and a size of the first field corresponding to the second waveform are not equal; at least one MSB equal to "0" is added to the first field with a smaller size, until the size of the first field corresponding to the first waveform and the size of the first field corresponding to the second waveform are equal.

In one embodiment, add at least one MSB equal to "0" in a first field with a smaller size to ensure consistency in the understanding of bits in DCI format between the base station and the UE.

In one embodiment, the first waveform is CP-OFDM, and the second waveform is DFT-s-OFDM.

In one embodiment, the second waveform is CP-OFDM, and the first waveform is DFT-s-OFDM.

In one embodiment, the first waveform is OFDM with transform precoding enabled, and the second waveform is OFDM with transform precoding disabled.

In one embodiment, the first waveform is OFDM with transform precoding enabled, and the second waveform is OFDM with transform precoding disabled.

In one embodiment, the X1 candidate waveforms only comprise the first waveform and the second waveform.

In one embodiment, the X1 candidate waveforms also comprise a waveform other than the first waveform or the second waveform.

In one embodiment, a size of the first field corresponding to the first waveform is equal to a size of the first field for the first waveform; a size of the first field corresponding to the second waveform is equal to a size of the first field for the second waveform.

In one embodiment, a size of the first field corresponding to the first waveform is equal to a size of the first field comprised in a DCI format used for scheduling a PUSCH using the first waveform, and a size of the first field corresponding to the second waveform is equal to a size of the first field comprised in a DCI format used for scheduling a PUSCH using the second waveform.

In one embodiment, a size of the first field corresponding to the first waveform is equal to a size of the first field for the first waveform when all other parameters other than waveform parameters in parameters affecting a size of the first field are given; a size of the first field corresponding to the first waveform is equal to a size of the first field for the second waveform when all other parameters other than waveform parameters in parameters affecting a size of the first field are given.

In one embodiment, a size of the first field corresponding to the first waveform is a size of the first field corresponding to the first waveform in the case of a given parameter value set, and the given parameter value set comprises at least one of parameter values such as transmission scheme (codebook based or non-codebook based transmission), full power mode, maximum rank, codebook subset, demodulation reference signal type, maximum length of a demodulation reference signal, modulation and coding scheme, or SRS resource indication value; a size of the first field corresponding to the second waveform is a size of the first field corresponding to the second waveform in the case of the given parameter value set.

In one embodiment, a size of the first field corresponding to the first waveform and a size of the first field corresponding to the second waveform are respectively two possible sizes of the first field when all other parameters other than waveform parameters in parameters affecting a size of the first field are given.

In one embodiment, a size of the first field corresponding to the first waveform and a size of the first field corresponding to the second waveform are respectively two possible sizes of the first field when all other parameters other than waveform parameters in parameters affecting a size of the first field are fixed.

In one embodiment, a size of the first field corresponding to the first waveform is less than a size of the first field corresponding to the second waveform.

In one embodiment, a size of the first field corresponding to the first waveform is greater than a size of the first field corresponding to the second waveform.

In one embodiment, the technical feature that "adding at least one MSB equal to "0" to the first field with a smaller size in the first field corresponding to the first waveform and the first field corresponding to the second waveform" includes the following meaning: when the size of the first field corresponding to the first waveform is less than a size of the first field corresponding to the second waveform, at least one MSB equal to "0" is added to the first field corresponding to the second waveform; when a size of the first field corresponding to the first waveform is greater than a size of the first field corresponding to the second waveform, at least one MSB equal to "0" is added to the first field corresponding to the first waveform.

In one embodiment, the technical feature that "adding at least one MSB equal to "0" to the first field with a smaller size in the first field corresponding to the first waveform and the first field corresponding to the second waveform" includes the following meaning: adding at least one bit equal to "0" to a high-order bit of the existing bits of the first field with a smaller size in a size of the first field corresponding to the first waveform and a size of the first field corresponding to the second waveform.

In one embodiment, the technical feature that "adding at least one MSB equal to "0" to the first field with a smaller size in the first field corresponding to the first waveform and the first field corresponding to the second waveform" includes the following meaning: adding M1 bit(s) equal to "0" to the first field with a smaller size in the first field corresponding to the first waveform and the first field corresponding to the second waveform to obtain a new first field, and the added M1 bit(s) equal to "0" occupies(occupy) highest M1 bit(s) of the new first field, M1 being a positive integer.

In one embodiment, the technical feature that "until a size of the first field corresponding to the first waveform is equal to a size of the first field corresponding to the second waveform" includes the following meaning: a number of MSB(s) equal to "0" added to the first field with a smaller size in the first field corresponding to the first waveform and the first field corresponding to the second waveform is equal to an absolute value of a difference value of a size of the first field corresponding to the first waveform and a size of the first field corresponding to the second waveform.

In one embodiment, the technical feature that "until a size of the first field corresponding to the first waveform is equal to a size of the first field corresponding to the second waveform" includes the following meaning: after adding at least one MSB equal to "0" to a first field with a smaller size in a size of the first field corresponding to the first waveform and a size of the first field corresponding to the second waveform, a size of the first field corresponding to the first waveform and a size of the first field corresponding to the second waveform are equal.

In one embodiment, the technical feature that "until a size of the first field corresponding to the first waveform is equal to a size of the first field corresponding to the second waveform" includes the following meaning: when a size of the first field corresponding to the first waveform is greater than a size of the first field corresponding to the second waveform, a size of the new first field corresponding to the second waveform after adding at least one MSB equal to "0" is equal to a size of the first field corresponding to the first waveform; when a size of the first field corresponding to the first waveform is less than a size of the first field corresponding to the second waveform, a size of the new first field corresponding to the first waveform after adding at least one MSB equal to "0" is equal to a size of the first field corresponding to the second waveform.

### Embodiment 7

Embodiment 7 illustrates a schematic diagram of a relation of a target waveform and a reference waveform according to one embodiment of the present application, as shown in FIG.7. In FIG. 7, each rectangle represents an operation, and each diamond represents a judgment; starting from 701, judge whether a first DCI format comprises a second field in 702, a second field indicates a target waveform in 703, and a target waveform is the same as a reference waveform in 704.

In embodiment 7, the second information block in the present application is used to determine a reference waveform, and the reference waveform is one of the X1 candidate waveforms in the present application; when the first DCI format in the present application does not comprise the second field, the target waveform and the reference waveform in the present application are the same.

In one embodiment, both a target waveform and a reference waveform provide a fallback mechanism for a dynamic waveform configuration, ensuring that the UE has a clear understanding on the uplink transmission waveform.

In one embodiment, the second information block provides an uplink waveform configuration when the first information block is default.

In one embodiment, the second information block provides a configuration for enabling/disabling transform precoding (or transform precoder) when the first information block is not provided.

In one embodiment, the second information block provides an uplink waveform configuration when a dynamic waveform switching is disabled by the first information block.

In one embodiment, the second information block provides a configuration for enabling/disabling transform precoding (or transform precoder) when dynamically switching transform precoding (or transform precoder) is disabled by the first information block.

In one embodiment, the second information block provides an uplink waveform configuration when the first information block defaults or a dynamic waveform switching is disabled by the first information block.

In one embodiment, the second information block provides a configuration for enabling/disabling transform precoding (or transform precoder) when the first information block is not provided or dynamically switching transform precoding (or transform precoder) is disabled by the first information block.

In one embodiment, the technical feature that "the second information block is used to determine a reference waveform" includes the following meaning: the second information block is used by the first node in the present application to determine the reference waveform.

In one embodiment, the technical feature that "the second information block is used to determine a reference waveform" includes the following meaning: all or part of the second information block is used to explicitly or implicitly indicate the reference waveform from the X1 candidate waveforms.

In one embodiment, the technical feature that "the second information block is used to determine a reference waveform" includes the following meaning: the second information block is used to explicitly or implicitly indicate whether the reference waveform adopts transform precoding (transform precoder).

In one embodiment, the technical feature that "the second information block is used to determine a reference waveform" includes the following meaning: the second information block is used to explicitly or implicitly indicate whether transform precoding (transform precoder) corresponding to the reference waveform is enabled or disabled (or on or off).

In one embodiment, the technical feature that "the second information block is used to determine a reference waveform" includes the following meaning: the second information block is used to explicitly or implicitly indicate whether transform precoding (transform precoder) for an uplink transmission is enabled or disabled (or on or off).

In one embodiment, the technical feature that "the second information block is used to determine a reference waveform" includes the following meaning: the second information block is used to explicitly or implicitly indicate whether transform precoding (transform precoder) of a PUSCH is enabled or disabled (or on or off).

In one embodiment, the technical feature that "the second information block is used to determine a reference waveform" includes the following meaning: when a parameter in the second information block is equal to a value or state, the reference waveform is OFDM with transform precoding (transform precoder) enabled; when a same parameter in the second information block is equal to another value or state, the reference waveform is OFDM with transform precoding (transform precoder) disabled.

## Embodiment 8

Embodiment 8 illustrates a schematic diagram of transmit power of a first PUSCH according to one embodiment of the present application, as shown in FIG. 8. In FIG. 8, in cases A and B, the vertical axis represents power, and in each case, two rectangles respectively represent a first upper limit value and a first power value; in case A, a first upper limit value is greater than a first power value; in case B, a first upper limit value is less than a first power value.

In embodiment 8, transmit power of the first PUSCH in the present application is equal to a smaller one between a first upper limit value and a first power value, a first parameter value is used to determine the first upper limit value, and a second parameter value is used to determine the first power value; at least the first parameter value between the first parameter value and the second parameter value is related to the target waveform in the present application.

In one embodiment, adjusting power parameters according to waveform further ensures a correct reception of uplink transmission.

In one embodiment, transmit power of the first PUSCH is measured by dBm.

In one embodiment, transmit power of the first PUSCH is measured by watt or milliwatt.

In one embodiment, transmit power of the first PUSCH is transmission power in a PUSCH transmission occasion to which the first PUSCH belongs in time domain and in an uplink BWP to which the first PUSCH belongs in frequency domain.

In one embodiment, the first upper limit value is a value of $P_{CMAX,f,c}(i)$ corresponding to the first PUSCH.

In one embodiment, the first upper limit value is configured maximum output power of a transmitter of the first PUSCH.

In one embodiment, the first upper limit value is configured maximum output power of a transmitter of the first PUSCH for a carrier of a serving cell to which the first PUSCH belongs and in a PUSCH transmission occasion to which the first PUSCH belongs in time domain.

In one embodiment, the first upper limit value is a power value related to RF characteristics of a transmitter of the first PUSCH in the first PUSCH.

In one embodiment, the first power value is a transmit power value of the first PUSCH when transmit power does not exceed the first upper limit value.

In one embodiment, the first power value is a transmit power value calculated through open loop power control and close loop power control upon transmitting the first PUSCH.

In one embodiment, the first power value is a transmit power value related to pathloss (PL) of a transmitter of the first PUSCH.

In one embodiment, the first power value is used to calculate transmit power of the first PUSCH and comprises close-loop power control.

In one embodiment, the first power value is a power value related to a value of bit per resource element (BPRE).

In one embodiment, the technical feature that "transmit power of the first PUSCH is equal to a smaller one between a first upper limit value and a first power value" includes the following meaning: when the first upper limit value is greater than the first power value, transmit power of the first PUSCH is equal to the first power value; when the first upper limit value is less than the first power value, transmit power of the first PUSCH is equal to the first upper value; when the first upper limit value is equal to the first power value, transmit power of the first PUSCH is equal to the first upper limit value or the first power value.

In one embodiment, the first upper limit is measured by dBm, and the first power value is measured by dBm.

In one embodiment, the first upper limit is measured by watts or milliwatts, and the first power value is measured by watts or milliwatts.

In one embodiment, a unit for measurement of the first upper limit value, a unit for measurement of the first power value, and transmit power of the first PUSCH are all the same.

In one embodiment, the first parameter value is a value of maximum power reduction (MPR).

In one embodiment, the first parameter value is a value of additional maximum power reduction (A-MPR).

In one embodiment, the first parameter value is a value of power management maximum power reduction (P-MPR).

In one embodiment, the first parameter value is a value of a parameter other than MPR, A-MPR, or P-MPR.

In one embodiment, the technical feature that "a first parameter value is used to determine the first upper limit value" includes the following meaning: the first parameter value is used by the first node in the present application for determining the first upper limit value.

In one embodiment, the technical feature that "a first parameter value is used to determine the first upper limit value" includes the following meaning: the first parameter value is used to determine a value interval (or value range) to which the first upper limit value belongs.

In one embodiment, the technical feature that "a first parameter value is used to determine the first upper limit value" includes the following meaning: the first parameter value is used to determine a lower boundary of a value interval (or value range) to which the first upper limit value belongs.

In one embodiment, the technical feature that "a first parameter value is used to determine the first upper limit value" includes the following meaning: the first parameter value is used to determine a lower bound value of the first upper limit value.

In one embodiment, the technical feature that "a first parameter value is used to determine the first upper limit value" includes the following meaning: the first parameter value is used to determine a value interval (or value range) to which the first upper limit value belongs, and a transmitter of the first PUSCH is allowed to set the first upper limit value within a value interval (or value range) to which the first upper limit value belongs.

In one embodiment, the second parameter value is a value of $P_{\text{O\_PUSCH, b}, f,c}(j)$ corresponding to the first PUSCH.

In one embodiment, the second parameter value is a value of $\Delta_{\text{TF,b}, f,c}(i)$ corresponding to the first PUSCH.

In one embodiment, the second parameter value is a value of $f_{\text{b}, f,c}(i, l)$ corresponding to the first PUSCH.

In one embodiment, the second parameter value is a value of $2^{\mu} \cdot M_{\text{RB, b}, f,c}^{\text{PUSCH}}(i)$ corresponding to the first PUSCH.

In one embodiment, the second parameter value is a value of a parameter other than $P_{\text{O\_PUSCH, b}, f,c}(j)$ corresponding to the first PUSCH, $\Delta_{\text{TF,b}, f,c}(i)$ corresponding to the first PUSCH, $f_{\text{b}, f,c}(i, l)$ corresponding to the first PUSCH, or $2^{\mu} \cdot M_{\text{RB, b}, f,c}^{\text{PUSCH}}(i)$ corresponding to the first PUSCH.

In one embodiment, the technical feature that "a second parameter value is used to determine the first power value" includes the following meaning: the second parameter value is used by the first node in the present application to determine the first power value.

In one embodiment, the technical feature that "a second parameter value is used to determine the first power value" includes the following meaning: the second parameter value is used to calculate the first power value.

In one embodiment, the technical feature that "a second parameter value is used to determine the first power value" includes the following meaning: the first power value and the second parameter value are linearly correlated.

In one embodiment, the technical feature that "a second parameter value is used to determine the first power value" includes the following meaning: logarithmic values of the first power value and the second parameter value are linearly correlated.

In one embodiment, the technical feature that "a second parameter value is used to determine the first power value" includes the following meaning: the second parameter value is used to determine the first power value according to a mapping relation or corresponding relation.

In one embodiment, the technical feature that "a second parameter value is used to determine the first power value" includes the following meaning: the first power value is equal to $P_{\text{O\_PUSCH, b}, f,c}(j)$ +

$$10 \, log_{10}(2^{\mu} \cdot M_{\text{RB, b}, f,c}^{\text{PUSCH}}(i)) + \alpha_{b,f,c}(j) \cdot PL_{b,f,c}(q_d) + \Delta_{\text{TF,b}, f,c}(i) + f_{b, f,c}(i,l)$$, where a value of one of

$P_{\text{O\_PUSCH, b}, f,c}(j)$, $2^{\mu} \cdot M_{\text{RB, b}, f,c}^{\text{PUSCH}}(i)$, $\Delta_{\text{TF,b}, f,c}(i)$, or $f_{\text{b}, f,c}(i, l)$ is equal to the second parameter value.

In one embodiment, the technical feature that "a second parameter value is used to determine the first power value" includes the following meaning: the first power value is equal to $P_{\text{O\_PUSCH, b}, f,c}(j)$ +

$$10 \, log_{10}(2^{\mu} \cdot M_{\text{RB, b}, f,c}^{\text{PUSCH}}(i)) + \alpha_{b,f,c}(j) \cdot PL_{b,f,c}(q_d) + \Delta_{\text{TF,b}, f,c}(i) + f_{b, f,c}(i,l) + \vartheta$$, where a value of $\vartheta$ is equal to the second parameter value.

In one embodiment, the technical feature that "at least the first parameter value between the first parameter value and the second parameter value is related to the target waveform" includes the following meaning: only the first parameter value in the first parameter value or the second parameter value is related to the target waveform.

In one embodiment, the technical feature that "at least the first parameter value between the first parameter value and the second parameter value is related to the target waveform" includes the following meaning: both the first parameter value and the second parameter value are related to the target waveform.

In one embodiment, "the first parameter value is related to the target waveform" includes the following meaning: the target waveform is used to determine the first parameter value.

In one embodiment, "the first parameter value is related to the target waveform" includes the following meaning: the target waveform is used to determine the first parameter value according to a pre-defined mapping relation or corresponding relation.

In one embodiment, "the first parameter value is related to the target waveform" includes the following meaning: the target waveform is used to determine the first parameter value according to a pre-defined table relation.

In one embodiment, "the first parameter value is related to the target waveform" includes the following meaning: the target waveform is used to determine the first parameter value according to a pre-defined function relation.

In one embodiment, "the first parameter value is related to the target waveform" includes the following meaning: the target waveform and a modulation and coding scheme (MCS) adopted by the first PUSCH are used together to determine the first parameter value according to a pre-defined table relation.

In one embodiment, "the first parameter value is related to the target waveform" includes the following meaning: the target waveform, an MCS adopted by the first PUSCH, and a position of frequency-domain resources occupied by the first PUSCH are used together to determine the first parameter value according to a pre-defined table relation.

In one embodiment, "the first parameter value is related to the target waveform" includes the following meaning: the target waveform and at least one of power level of a transmitter of the first PUSCH, carrier frequency of the first PUSCH, receiving device category of the first PUSCH, a number of frequency-domain resources occupied by the first PUSCH, a subcarrier spacing of a subcarrier occupied by the first PUSCH, a frequency-domain position of frequency-domain resources occupied by the first PUSCH, or an MCS adopted by the first PUSCH is used to determine the first parameter value.

In one embodiment, when the second parameter value is related to the target waveform, "the second parameter value being related to the target waveform" includes the following meaning: the target waveform is used to determine the second parameter value.

In one embodiment, when the second parameter value is related to the target waveform, "the second parameter value being related to the target waveform" includes the following meaning: the target waveform is used to determine the second parameter value according to a pre-defined mapping relation or corresponding relation or conditional relation.

In one embodiment, when the second parameter value is related to the target waveform, "the second parameter value being related to the target waveform" includes the following meaning: different waveforms correspond to different candidate values for the second parameter value according to a pre-defined mapping relation, corresponding relation, or conditional relation, and the second parameter value is a candidate value corresponding to the target waveform.

In one embodiment, when the second parameter value is related to the target waveform, "the second parameter value being related to the target waveform" includes the following meaning: the target waveform is used to determine the second parameter value according to a pre-defined table relation.

In one embodiment, when the second parameter value is related to the target waveform, "the second parameter value being related to the target waveform" includes the following meaning: the second parameter value is a value of $P_{\text{O\_PUSCH, b}, f,c}(j)$ corresponding to the first PUSCH, and a value of parameter $j$ in $P_{\text{O\_PUSCH, b}, f,c}(j)$ corresponding to the first PUSCH is related to the target waveform.

In one embodiment, when the second parameter value is related to the target waveform, "the second parameter value being related to the target waveform" includes the following meaning: the second parameter value is a value of $f_{b, f,c}(i, l)$ corresponding to the first PUSCH, and a value of parameter $l$ in $f_{b, f,c}(i, l)$ corresponding to the first PUSCH is related to the target waveform.

In one embodiment, when the second parameter value is related to the target waveform, "the second parameter value being related to the target waveform" includes the following meaning: the second parameter value is a value of $\Delta_{\text{TF,b}, f,c}(i)$ corresponding to the first PUSCH, and $\Delta_{\text{TF,b}, f,c}(i)$ corresponding to the first PUSCH satisfies:

$$\Delta_{\text{TF},f,c}(i) = 10\, log_{10}\left( (2^{\text{BPRE} \cdot K_s} - 1) \cdot \beta_{\text{offset}}^{\text{PUSCH}} \right)$$

herein, $K_s$ is related to the target waveform, and $\beta_{\text{offset}}^{\text{PUSCH}}$ is related to whether the first PUSCH carries a UL-SCH.

In one embodiment, when the second parameter value is related to the target waveform, "the second parameter value being related to the target waveform" includes the following meaning: the second parameter value is a value of $\Delta_{\text{TF,b}, f,c}(i)$ corresponding to the first PUSCH, and $\Delta_{\text{TF,b}, f,c}(i)$ corresponding to the first PUSCH satisfies:

$$\Delta_{\text{TF},f,c}(i) = 10\, log_{10}\left(\left(2^{\text{BPRE}\cdot K_s \cdot K_w} - 1\right) \cdot \beta_{\text{offset}}^{\text{PUSCH}}\right)$$

herein, $K_s$ is a configured parameter, $K_w$ is related to the target waveform, and $\beta_{\text{offset}}^{\text{PUSCH}}$ is related to whether the first PUSCH carries a UL-SCH.

In one embodiment, when the second parameter value is related to the target waveform, "the second parameter value being related to the target waveform" includes the following meaning: the target waveform is used to determine a sub-parameter according to a corresponding relation or conditional relation, and the sub-parameter is used to calculate the second parameter value.

**Embodiment 9**

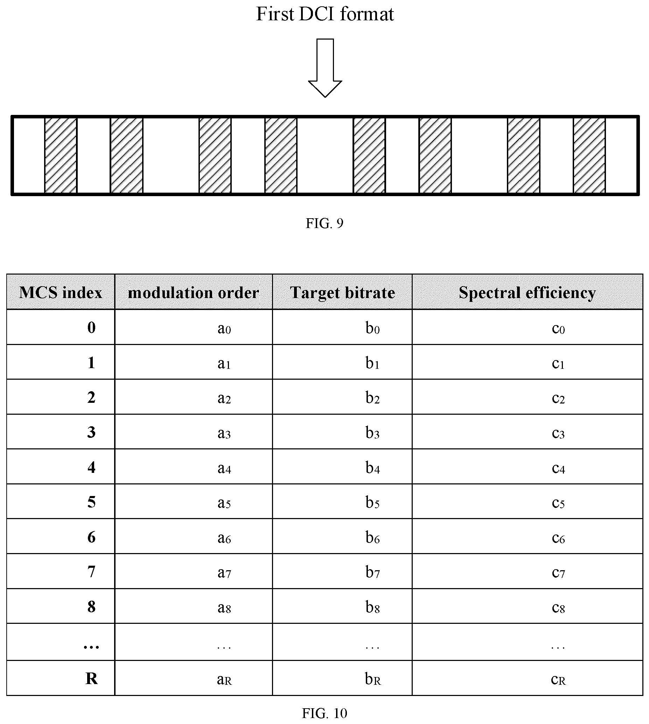

Embodiment 9 illustrates a schematic diagram of a first search space set, as shown in FIG.9. In FIG. 9, each slash-filled rectangle represents a PDCCH candidate comprised in a first search space set.

In embodiment 9, the first DCI format in the present application is associated with a first search space set, and the first search space set is a USS set; the first DCI format is a DCI format other than DCI format 0_0, a first identifier is used for a scrambling sequence of a PDCCH carrying the first DCI format, and the first identifier is pre-defined.

In one embodiment, adjusting waveforms in a USS set simplifies the design.

In one embodiment, the first search space set is a PDCCH search space set.

In one embodiment, the first search space set is signaling configured.

In one embodiment, the first search space set is pre-defined.

In one embodiment, the first information block in the present application is used to configure the first search space set.

In one embodiment, an information block other than the first information block in the present application is used to configure the first search space set.

In one embodiment, an index or ID of the first search space set is equal to 0.

In one embodiment, an index or ID of the first search space set is greater than 0.

In one embodiment, an index or ID of a CORESET (control resource set) associated with the first search space set is equal to 0.

In one embodiment, an index or ID of a CORESET (control resource set) associated with the first search space set is greater than 0.

In one embodiment, the technical feature that "the first DCI format is associated with a first search space set" includes the following meaning: the first DCI format is a DCI format supported by the first search space set.

In one embodiment, the technical feature that "the first DCI format is associated with a first search space set" includes the following meaning: at least one DCI format configured for the first search space set comprises the first DCI format.

In one embodiment, the technical feature that "the first DCI format is associated with a first search space set" includes the following meaning: a configuration signaling used to configure the first search space set is also configured with the first DCI format.

In one embodiment, the technical feature that "the first DCI format is associated with a first search space set" includes the following meaning: a monitoring for a PDCCH candidate comprised in the first search space set adopts the first DCI format.

In one embodiment, the technical feature that "the first DCI format is associated with a first search space set" includes the following meaning: the first DCI format is comprised in at least one DCI format adopted for monitoring a PDCCH candidate comprised in the first search space set.

In one embodiment, the first DCI format is a DCI format other than a DCI format that can be supported by a Common Search Space (CSS).

In one embodiment, the first DCI format is a DCI format only capable of being supported by a UE-specific search space (USS) set.

In one embodiment, the first DCI format can be supported by both a USS set and a common search space (CSS) set.

In one embodiment, the first search space set is a search space set only capable of being configured by a UE-specific higher-layer signaling or higher-layer parameter.

In one embodiment, the first DCI format cannot be DCI format 0_0.

In one embodiment, the first identity is an RNTI.

In one embodiment, the first identifier is a non-negative integer.

In one embodiment, a PDCCH carrying the first DCI format is a scheduling PDCCH of the first PUSCH.

In one embodiment, a PDCCH carrying the first DCI format is a PDCCH other than a PDCCH scheduling the first PUSCH.

In one embodiment, the technical feature that "a first identifier is used for a scrambling sequence of a PDCCH carrying the first DCI format" includes the following meaning: the first identifier is used by the first node or the second node in the present application for a scrambling sequence of a PDCCH carrying the first DCI format.

In one embodiment, the technical feature that "a first identifier is used for a scrambling sequence of a PDCCH carrying the first DCI format" includes the following meaning: the first identifier is used to initialize a generator of a scrambling sequence of a PDCCH carrying the first DCI format.

In one embodiment, the technical feature that "a first identifier is used for a scrambling sequence of a PDCCH carrying the first DCI format" includes the following meaning: the first identifier is used to determine an initial value of a generator of a scrambling sequence of a PDCCH carrying the first DCI format.

In one embodiment, the technical feature that "a first identifier is used for a scrambling sequence of a PDCCH carrying the first DCI format" includes the following meaning: the first identifier is used to scramble a CRC of a PDCCH carrying the first DCI format.

In one embodiment, the technical feature that "a first identifier is used for a scrambling sequence of a PDCCH carrying the first DCI format" includes the following meaning: the first identifier is used to initialize a generator of a scrambling sequence of the PDCCH carrying the first DCI format, and the first identifier is used to scramble a CRC of a PDCCH carrying the first DCI format.

In one embodiment, the technical feature that "the first identifier is pre-defined" includes the following meaning: the first identifier is fixed or the first identifier belongs to a fixed identifier set.

In one embodiment, the technical feature that "the first identifier is pre-defined" includes the following meaning: the first identifier is fixed or the first identifier is one of multiple fixed identifiers.

In one embodiment, the technical feature that "the first identifier is pre-defined" includes the following meaning: the first identifier is a C-RNTI.

In one embodiment, the technical feature that "the first identifier is pre-defined" includes the following meaning: the first identifier is a C-RNTI or an MCS-RNTI.

In one embodiment, the technical feature that "the first identifier is pre-defined" includes the following meaning: the first identifier is a C-RNTI, an MCS-RNTI, or an SP-CSI-RNTI.

In one embodiment, the technical feature that "the first identifier is pre-defined" includes the following meaning: the first identifier is a CS-RNTI, a C-RNTI, an MCS-RNTI, or an SP-CSI-RNTI.

## Embodiment 10

Embodiment 10 illustrates a schematic diagram of a first MCS set according to one embodiment of the present application, as shown in FIG.10. The table in FIG. 10 denotes a first MCS set, each row denotes an MCS comprised in a first MCS set, the first column on the left denotes MCS index, "$a_0,a_1,a_2,a_3,a_4,a_5,a_6,a_7,a_8,...,a_R$" in the second column on the left respectively denotes modulation orders, "$b_0,b_1,b_2,b_3,b_4,b_5,b_6,b_7,b_8,..., b_R$" in the third column on the left denotes target code rate, and "$c_0,c_1,c_2,c_3,c_4,c_5,c_6,c_7,c_8,..., c_R$" in the fourth column on the left denotes spectral efficiency.

In embodiment 10, the first DCI format in the present application comprises a third field, the third filed is different from the first field in the present application, and the third field is different from the second field in the present application; an MCS adopted by the first PUSCH in the present application belongs to a first MCS set, the first MCS set comprises multiple MCSs, the third field is used to determine an MCS adopted by the first PUSCH from the first MCS set, and the target waveform in the present application is used to determine the first MCS set.

In one embodiment, the third field is an MCS field.

In one embodiment, a size of the third field is unrelated to the target waveform.

In one embodiment, a bitwidth of the third field is unrelated to the target waveform.

In one embodiment, a number of bit(s) comprised in the third field is fixed.

In one embodiment, the third field comprises 5 bits.

In one embodiment, an MCS adopted by the first PUSCH is an MCS comprised in the first MCS set.

In one embodiment, an MCS adopted by the first PUSCH is a combination of a modulation order adopted to generate a modulation symbol of the first PUSCH, a target code rate adopted to generate the first PUSCH, and a spectral efficiency of the first PUSCH.

In one embodiment, a number of MCS(s) comprised in the first MCS set is not greater than 32.

In one embodiment, a number of MCS(s) comprised in the first MCS set is equal to 32.

In one embodiment, any two MCSs comprised in the first MCS set are different.

In one embodiment, the first MCS set comprises a reserved MCS.

In one embodiment, the first MCS set does not comprises a reserved MCS.

In one embodiment, the first MCS set is an MCS table.

In one embodiment, any MCS comprised in the first MCS set is a combination of a modulation order, a target code rate and a spectral efficiency.

In one embodiment, the technical feature that "the third field is used to determine an MCS adopted by the first PUSCH from the first MCS set" includes the following meaning: the third field is used by the first node in the present application to determine an MCS adopted by the first PUSCH from the first MCS set.

In one embodiment, the technical feature that "the third field is used to determine an MCS adopted by the first PUSCH from the first MCS set" includes the following meaning: the third field is used to explicitly or implicitly indicate an MCS adopted by the first PUSCH from the first MCS set.

In one embodiment, the technical feature that "the third field is used to determine an MCS adopted by the first PUSCH from the first MCS set" includes the following meaning: the third field is used to explicitly or implicitly indicate an index of an MCS adopted by the first PUSCH in the first MCS set.

In one embodiment, the technical feature that "the third field is used to determine an MCS adopted by the first PUSCH from the first MCS set" includes the following meaning: MCSs comprised in the first MCS set are sequentially indexed, and the third field is used to explicitly or implicitly indicate an index of an MCS adopted by the first PUSCH in the first MCS set.

In one embodiment, the technical feature that "the target waveform is used to determine the first MCS set" includes the following meaning: the target waveform is used by the first node in the present application to determine the first MCS set.

In one embodiment, the technical feature that "the target waveform is used to determine the first MCS set" includes the following meaning: the target waveform is used to determine the first MCS set from multiple MCS sets according to a pre-defined mapping relation or corresponding relation.

In one embodiment, the technical feature that "the target waveform is used to determine the first MCS set" includes the following meaning: the target waveform is used to determine the first MCS set from multiple MCS sets according to a conditional relation.

In one embodiment, the technical feature that "the target waveform is used to determine the first MCS set" includes the following meaning: when the target waveform is one of the X1 candidate waveforms, the first MCS set is an MCS set in a group of MCS sets; when the target waveform is another one of the X1 candidate waveforms, the first MCS set is an MCS set in another one group of MCS sets.

In one embodiment, the technical feature that "the target waveform is used to determine the first MCS set" includes the following meaning: the target waveform is used to determine an MCS set group to which the first MCS set belongs, and an MCS set group to which the first MCS set belongs comprises at least one MCS set.

In one embodiment, the technical feature that "the target waveform is used to determine the first MCS set" includes the following meaning: when the target waveform is one of the X1 candidate waveforms, the first MCS set is an MCS set; when the target waveform is another one of the X1 candidate waveforms, the first MCS set is another MCS set.

In one embodiment, the technical feature that "the target waveform is used to determine the first MCS set" includes the following meaning: the X1 candidate waveforms respectively correspond to X1 MCS set groups, and each one of the X1 MCS set groups comprises at least one MCS set; a set group corresponding to the target waveform among the X1 MCS set groups comprises the first MCS set.

In one embodiment, the technical feature that "the target waveform is used to determine the first MCS set" includes the following meaning: the target waveform and the first DCI format are both used to determine the first MCS set.

In one embodiment, the technical feature that "the target waveform is used to determine the first MCS set" includes the following meaning: the target waveform and a configuration signaling of a PUSCH are both used to determine the first MCS set.

In one embodiment, the technical feature that "the target waveform is used to determine the first MCS set" includes the following meaning: the target waveform and a scrambling sequence of a CRC of a PDCCH carrying the first DCI format are both used to determine the first MCS set.

In one embodiment, the technical feature that "the target waveform is used to determine the first MCS set" includes the following meaning: the target waveform and at least one of the first DCI format, a configuration signaling of a PUSCH, or a scrambling sequence of a CRC of a PDCCH carrying the first DCI format are used together to determine the first MCS set.

## Embodiment 11

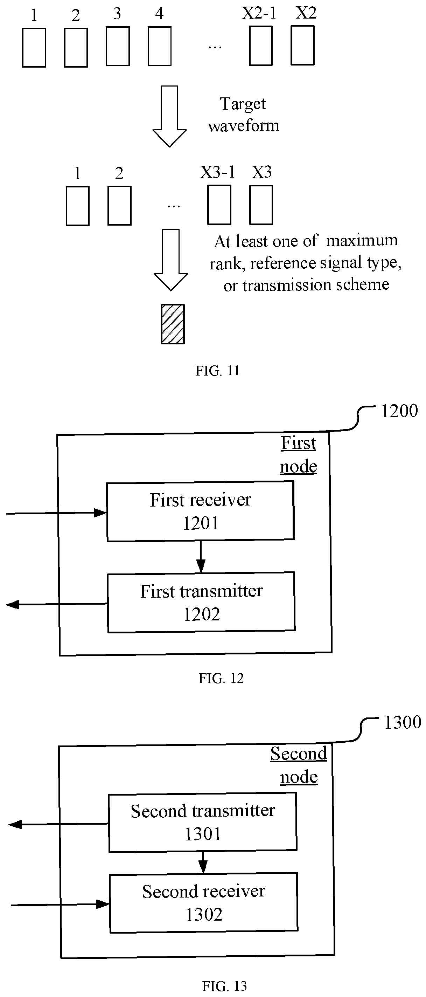

Embodiment 11 illustrates a schematic diagram of a target size according to one embodiment of the present application, as shown in FIG. 11. In FIG. 11, each rectangle denotes one of X2 candidate sizes, and the slash-filled rectangle denotes a target size, it should be noted that the target size in the figure is not limited to the order determined by the target waveform first and then by at least one of the maximum rank, reference signal type, or transmission scheme in the implementation. It can also be in other orders, such as the target size is determined by at least one of the maximum rank, reference signal type, or transmission scheme first and then by the target waveform, or is by at least one of the maximum rank, reference signal type, or transmission scheme together with the target waveform.

In embodiment 11, X3 candidate sizes correspond to the target waveform in the present application, X3 being a positive integer greater than 1 and less than X2, and each one of the X3 candidate sizes is one of the X2 candidate sizes in the present application; at least one of a maximum rank corresponding to the first PUSCH in the present application, a type of a demodulation reference signal of the first PUSCH, or a transmission scheme corresponding to the first PUSCH is used to determine the target size in the present application from the X3 candidate sizes.

In one embodiment, the X3 candidate sizes are X3 candidate sizes for the target waveform among the X2 candidate sizes.

In one embodiment, each one of the X3 candidate sizes is a possible size of the first field when using the target waveform.

In one embodiment, any candidate size other than the X3 candidate sizes among the X2 candidate sizes corresponds to a waveform other than the target waveform.

In one embodiment, X3 is not greater than 7.

In one embodiment, X3 is not greater than 6.

In one embodiment, X3 is equal to 3.

In one embodiment, a maximum rank corresponding to the first PUSCH is equal to one of 1, 2, 3, or 4.

In one embodiment, the first information block in the present application is used to determine a maximum rank corresponding to the first PUSCH.

In one embodiment, an information block other than the first information block in the present application is used to determine a maximum rank corresponding to the first PUSCH.

In one embodiment, a type of a demodulation reference signal for the first PUSCH is either Type 1 or Type 2.

In one embodiment, a type of a demodulation reference signal for the first PUSCH is a configuration type of a demodulation reference signal.

In one embodiment, the first information block in the present application is used to determine a type of a demodulation reference signal for the first PUSCH.

In one embodiment, an information block other than the first information block in the present application is used to determine a type of a demodulation reference signal for the first PUSCH.

In one embodiment, the transmission scheme corresponding to the first PUSCH is one of codebook based transmission or non-codebook based transmission.

In one embodiment, the first information block in the present application is used to determine a transmission scheme corresponding to the first PUSCH.

In one embodiment, an information block other than the first information block in the present application is used to determine a transmission scheme corresponding to the first PUSCH.

In one embodiment, the technical feature that "at least one of a maximum rank corresponding to the first PUSCH, a type of a demodulation reference signal of the first PUSCH, or a transmission scheme corresponding to the first PUSCH is used to determine the target size from the X3 candidate sizes" includes the following meaning: at least one of a maximum rank corresponding to the first PUSCH, a type of a demodulation reference signal of the first PUSCH, or a transmission scheme corresponding to the first PUSCH is used by the first node in the present application to determine the target size from the X3 candidate sizes.

In one embodiment, the technical feature that "at least one of a maximum rank corresponding to the first PUSCH, a type of a demodulation reference signal of the first PUSCH, or a transmission scheme corresponding to the first PUSCH is used to determine the target size from the X3 candidate sizes" includes the following meaning: only one of a maximum rank corresponding to the first PUSCH, a type of a demodulation reference signal of the first PUSCH, and a transmission scheme corresponding to the first PUSCH is used to determine the target size from the X3 candidate sizes.

In one embodiment, the technical feature that "at least one of a maximum rank corresponding to the first PUSCH, a type of a demodulation reference signal of the first PUSCH, or a transmission scheme corresponding to the first PUSCH is used to determine the target size from the X3 candidate sizes" includes the following meaning: two of a maximum rank corresponding to the first PUSCH, a type of a demodulation reference signal of the first PUSCH, and a transmission scheme corresponding to the first PUSCH is used to determine the target size from the X3 candidate sizes.

In one embodiment, the technical feature that "at least one of a maximum rank corresponding to the first PUSCH, a type of a demodulation reference signal of the first PUSCH, or a transmission scheme corresponding to the first PUSCH is used to determine the target size from the X3 candidate sizes" includes the following meaning: at least one of a maximum rank corresponding to the first PUSCH, a type of a demodulation reference signal of the first PUSCH, or a transmission scheme corresponding to the first PUSCH is used to determine the target size from the X3 candidate sizes according to a corresponding relation or mapping relation.

In one embodiment, the technical feature that "at least one of a maximum rank corresponding to the first PUSCH, a type of a demodulation reference signal of the first PUSCH, or a transmission scheme corresponding to the first PUSCH is used to determine the target size from the X3 candidate sizes" includes the following meaning: at least one of a maximum rank corresponding to the first PUSCH, a type of a demodulation reference signal of the first PUSCH, or a transmission scheme corresponding to the first PUSCH is used to determine the target size from the X3 candidate sizes according to a conditional relation.

In one embodiment, the technical feature that "at least one of a maximum rank corresponding to the first PUSCH, a type of a demodulation reference signal of the first PUSCH, or a transmission scheme corresponding to the first PUSCH is used to determine the target size from the X3 candidate sizes" includes the following meaning: at least one of a maximum rank corresponding to the first PUSCH, a type of a demodulation reference signal of the first PUSCH, or a transmission scheme corresponding to the first PUSCH is used as a parameter to determine the target size from the X3 candidate sizes according to a function relation.

In one embodiment, full power mode adopted by the first PUSCH is also used to determine the target size from the X3 candidate sizes.

In one embodiment, a codebook subset corresponding to the first PUSCH is also used to determine the target size from the X3 candidate sizes.

In one embodiment, a maximum length of a demodulation reference signal of the first PUSCH is also used to determine the target size from the X3 candidate sizes.

In one embodiment, a modulation and coding method adopted by the first PUSCH is also used to determine the target size from the X3 candidate sizes.

In one embodiment, an SRS resource indication value corresponding to the first PUSCH is used to determine the target size from the X3 candidate sizes.

## Embodiment 12

Embodiment 12 illustrates the structure diagram of a processor in a first node, as shown in FIG. 12. In FIG. 12, a processor 1200 in the first node consists of a first receiver 1201 and a first transmitter 1202. The first receiver 1201 comprises the transmitter/receiver 456 (including the antenna 460), the receiving processor 452 and the controller/processor 490 in FIG. 4 of the present application; the first transmitter 1202 comprises the transmitter/receiver 456 (including the antenna 460), the transmitting processor 455 and the controller/processor 490 in FIG. 4 of the present application.

In embodiment 12, the first receiver 1201 receives a first information block and a first DCI format, the first DCI format at least comprises a first field, and the first information block is used to determine whether the first DCI format comprises a second field, and the first field and the second field comprised in the first DCI format are two different fields; the first transmitter 1202 transmits a first PUSCH, a waveform adopted by the first PUSCH is a target waveform, and the target waveform is one of X1 candidate waveforms, X1 being a positive integer greater than 1; herein, when the first DCI format comprises the second field, the second field comprised in the first DCI format is used to determine the target waveform out of the X1 candidate waveforms; a target size is equal to a size of the first field comprised in the first DCI format, the target size is equal to one of X2 candidate sizes, and each one of the X2 candidate sizes is an integer equal to or greater than 0, X2 being a positive integer greater than 1; the target size is equal to a maximum candidate size of candidate sizes corresponding to the X1 candidate waveforms among the X2 candidate sizes.

In one embodiment, a first waveform and a second waveform are respectively two different candidate waveforms among the X1 candidate waveforms, and a size of the first field corresponding to the first waveform and a size of the first field corresponding to the second waveform are not equal; at least one MSB equal to "0" is added to the first field with a smaller size in the first field corresponding to the first waveform and the first field corresponding to the second waveform, until a size of the first field corresponding to the first waveform and a size of the first field corresponding to the second waveform are equal.

In one embodiment, the first receiver 1201 receives a second information block; herein, the second information block is used to determine a reference waveform, and the reference waveform is one of the X1 candidate waveforms; when the first DCI format does not comprise the second field, the target waveform and the reference waveform are the same.

In one embodiment, transmit power of the first PUSCH is equal to a smaller one between a first upper limit value and a first power value, a first parameter value is used to determine the first upper limit value, and a second parameter value is used to determine the first power value; at least the first parameter value between the first parameter value and the second parameter value is related to the target waveform.

In one embodiment, the first DCI format is associated with a first search space set, and the first search space set is a USS set; the first DCI format is a DCI format other than DCI format 0_0, a first identifier is used for a scrambling sequence of a PDCCH carrying the first DCI format, and the first identifier is pre-defined.

In one embodiment, the first DCI format comprises a third field, the third field and the first field are different, and the third field and the second field are different; an MCS adopted by the first PUSCH belongs to a first MCS set, the first MCS set comprises multiple MCSs, the third field is used to determine an MCS adopted by the first PUSCH from the first MCS set, and the target waveform is used to determine the first MCS set.

In one embodiment, X3 candidate sizes correspond to the target waveform, X3 being a positive integer greater than 1 and less than X2, and each one of the X3 candidate sizes is one of the X2 candidate sizes; at least one of a maximum rank corresponding to the first PUSCH, a type of a demodulation reference signal of the first PUSCH, or a transmission scheme corresponding to the first PUSCH is used to determine the target size from the X3 candidate sizes.

**Embodiment 13**

Embodiment 13 illustrates the structure diagram of a processor in a second node, as shown in FIG. 13. In FIG. 13, a processor 1300 in the second node consists of a second transmitter 1301 and a second receiver 1302. The second transmitter 1301 comprises the transmitter/receiver 416 (including the antenna 460), the transmitting processor 415 and the controller/processor 440 in FIG. 4 of the present application; the second transmitter 1302 comprises the transmitter/receiver 416 (including the antenna 460), the receiving processor 412 and the controller/processor 440 in FIG. 4 of the present application.

In embodiment 13, the second transmitter 1301 transmits a first information block and transmits a first DCI format, the first DCI format at least comprises a first field, and the first information block is used to determine whether the first DCI format comprises a second field, and the first field and the second field comprised in the first DCI format are two different fields; the second receiver 1302 receives a first PUSCH, a waveform adopted by the first PUSCH is a target waveform, and the target waveform is one of X1 candidate waveforms, X1 being a positive integer greater than 1; herein, when the first DCI format comprises the second field, the second field comprised in the first DCI format is used to determine the target waveform out of the X1 candidate waveforms; a target size is equal to a size of the first field comprised in the first DCI format, the target size is equal to one of X2 candidate sizes, and each one of the X2 candidate sizes is an integer equal to or greater than 0, X2 being a positive integer greater than 1; the target size is equal to a maximum candidate size of candidate sizes corresponding to the X1 candidate waveforms among the X2 candidate sizes.

In one embodiment, a first waveform and a second waveform are respectively two different candidate waveforms among the X1 candidate waveforms, and a size of the first field corresponding to the first waveform and a size of the first field corresponding to the second waveform are not equal; at least one MSB equal to "0" is added to the first field with a smaller size in the first field corresponding to the first waveform and the first field corresponding to the second waveform, until a size of the first field corresponding to the first waveform and a size of the first field corresponding to the second waveform are equal.

In one embodiment, the second transmitter 1301 transmits a second information block; herein, the second information block is used to determine a reference waveform, and the reference waveform is one of the X1 candidate waveforms; when the first DCI format does not comprise the second field, the target waveform and the reference waveform are the same.

In one embodiment, transmit power of the first PUSCH is equal to a smaller one between a first upper limit value and a first power value, a first parameter value is used to determine the first upper limit value, and a second parameter value is used to determine the first power value; at least the first parameter value between the first parameter value and the second parameter value is related to the target waveform.

In one embodiment, the first DCI format is associated with a first search space set, and the first search space set is a USS set; the first DCI format is a DCI format other than DCI format 0_0, a first identifier is used for a scrambling sequence of a PDCCH carrying the first DCI format, and the first identifier is pre-defined.

In one embodiment, the first DCI format comprises a third field, the third field and the first field are different, and the third field and the second field are different; an MCS adopted by the first PUSCH belongs to a first MCS set, the first MCS set comprises multiple MCSs, the third field is used to determine an MCS adopted by the first PUSCH from the first MCS set, and the target waveform is used to determine the first MCS set.

In one embodiment, X3 candidate sizes correspond to the target waveform, X3 being a positive integer greater than 1 and less than X2, and each one of the X3 candidate sizes is one of the X2 candidate sizes; at least one of a maximum rank corresponding to the first PUSCH, a type of a demodulation reference signal of the first PUSCH, or a transmission scheme corresponding to the first PUSCH is used to determine the target size from the X3 candidate sizes.

The ordinary skill in the art may understand that all or part of steps in the above method may be implemented by instructing related hardware through a program. The program may be stored in a computer readable storage medium, for example Read-Only Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The first node or the second node in the present application includes but is not limited to mobile phones, tablet computers, notebooks, network cards, low-consumption equipment, enhanced MTC (eMTC) terminals, NB-IOT terminals, vehicle-mounted communication equipment, aircrafts, diminutive airplanes, unmanned aerial vehicles, telecontrolled aircrafts and other wireless communication devices. The base station or network side equipment in the present application includes but is not limited to macro-cellular base stations, micro-cellular base stations, home base stations, relay base station, eNB, gNB, Transmitter Receiver Point (TRP), relay satellites, satellite base stations, space base stations and other radio communication equipment.

It will be appreciated by those skilled in the art that this disclosure can be implemented in other designated forms without departing from the core features or fundamental characters thereof. The currently disclosed embodiments, in any case, are therefore to be regarded only in an illustrative, rather than a restrictive sense. The scope of invention shall be determined by the claims attached, rather than according to previous descriptions, and all changes made with equivalent meaning are intended to be included therein.

**Claims**

1.  A first node for wireless communications, comprising:

    a first receiver, receiving a first information block and a first DCI (Downlink Control Information) format, the first DCI format at least comprising a first field, the first information block being used to determine whether the first DCI format comprises a second field, the first field and the second field comprised in the first DCI format being two different fields; and
    a first transmitter, transmitting a first PUSCH, a waveform adopted by the first PUSCH being a target waveform, the target waveform being one of X1 candidate waveforms, X1 being a positive integer greater than 1; wherein when the first DCI format comprises the second field, the second field comprised in the first DCI format is used to determine the target waveform out of the X1 candidate waveforms; a target size is equal to a size of the first field comprised in the first DCI format, the target size is equal to one of X2 candidate sizes, and each one of the X2 candidate sizes is an integer equal to or greater than 0, X2 being a positive integer greater than 1; the target size is equal to a maximum candidate size of candidate sizes corresponding to the X1 candidate waveforms among the X2 candidate sizes.

2.  The first node according to claim 1, wherein a first waveform and a second waveform are respectively two different candidate waveforms among the X1 candidate waveforms, and a size of the first field corresponding to the first waveform and a size of the first field corresponding to the second waveform are not equal; at least one MSB (Most Significant Bit) equal to "0" is added to the first field with a smaller size, until the size of the first field corresponding to the first waveform and the size of the first field corresponding to the second waveform are equal.

3.  The first node according to claim 1 or 2, wherein the first receiver receives a second information block; wherein the second information block is used to determine a reference waveform, and the reference waveform is one of the X1 candidate waveforms; when the first DCI format does not comprise the second field, the target waveform and the reference waveform are the same.

4.  The first node according to any of claims 1-3, wherein transmit power of the first PUSCH is equal to a smaller one between a first upper limit value and a first power value, a first parameter value is used to determine the first upper limit value, and a second parameter value is used to determine the first power value; at least the first parameter value between the first parameter value and the second parameter value is related to the target waveform.

5.  The first node according to any of claims 1-4, wherein the first DCI format is associated with a first search space set, and the first search space set is a UE-specific search space (USS) set; the first DCI format is a DCI format other than DCI format 0_0, a first identifier is used for a scrambling sequence of a PDCCH carrying the first DCI format, and the first identifier is pre-defined.

6.  The first node according to any of claims 1-5, wherein the first DCI format comprises a third field, the third field and the first field are different, and the third field and the second field are different; an MCS adopted by the first PUSCH belongs to a first MCS set, the first MCS set comprises multiple MCSs, the third field is used to determine an MCS adopted by the first PUSCH from the first MCS set, and the target waveform is used to determine the first MCS set.

7. The first node according to any of claims 1-6, wherein X3 candidate sizes correspond to the target waveform, X3 being a positive integer greater than 1 and less than X2, and each one of the X3 candidate sizes is one of the X2 candidate sizes; at least one of a maximum rank corresponding to the first PUSCH, a type of a demodulation reference signal of the first PUSCH, or a transmission scheme corresponding to the first PUSCH is used to determine the target size from the X3 candidate sizes.

8. A second node for wireless communications, comprising:

a second transmitter, transmitting a first information block and a first DCI (Downlink Control Information) format, the first DCI format at least comprising a first field, the first information block being used to determine whether the first DCI format comprises a second field, the first field and the second field comprised in the first DCI format being two different fields; and
a second receiver, receiving a first PUSCH, a waveform adopted by the first PUSCH being a target waveform, the target waveform being one of X1 candidate waveforms, X1 being a positive integer greater than 1;

wherein when the first DCI format comprises the second field, the second field comprised in the first DCI format is used to determine the target waveform out of the X1 candidate waveforms; a target size is equal to a size of the first field comprised in the first DCI format, the target size is equal to one of X2 candidate sizes, and each one of the X2 candidate sizes is an integer equal to or greater than 0, X2 being a positive integer greater than 1; the target size is equal to a maximum candidate size of candidate sizes corresponding to the X1 candidate waveforms among the X2 candidate sizes.

9. A method in a first node for wireless communications, comprising:

receiving a first information block and a first DCI (Downlink Control Information) format, the first DCI format at least comprising a first field, the first information block being used to determine whether the first DCI format comprises a second field, the first field and the second field comprised in the first DCI format being two different fields; and
transmitting a first PUSCH, a waveform adopted by the first PUSCH being a target waveform, the target waveform being one of X1 candidate waveforms, X1 being a positive integer greater than 1;

wherein when the first DCI format comprises the second field, the second field comprised in the first DCI format is used to determine the target waveform out of the X1 candidate waveforms; a target size is equal to a size of the first field comprised in the first DCI format, the target size is equal to one of X2 candidate sizes, and each one of the X2 candidate sizes is an integer equal to or greater than 0, X2 being a positive integer greater than 1; the target size is equal to a maximum candidate size of candidate sizes corresponding to the X1 candidate waveforms among the X2 candidate sizes.

10. A method in a second node for wireless communications, comprising:

transmitting a first information block and a first DCI (Downlink Control Information) format, the first DCI format at least comprising a first field, the first information block being used to determine whether the first DCI format comprises a second field, the first field and the second field comprised in the first DCI format being two different fields; and
receiving a first PUSCH, a waveform adopted by the first PUSCH being a target waveform, the target waveform being one of X1 candidate waveforms, X1 being a positive integer greater than 1;
wherein when the first DCI format comprises the second field, the second field comprised in the first DCI format is used to determine the target waveform out of the X1 candidate waveforms; a target size is equal to a size of the first field comprised in the first DCI format, the target size is equal to one of X2 candidate sizes, and each one of the X2 candidate sizes is an integer equal to or greater than 0, X2 being a positive integer greater than 1; the target size is equal to a maximum candidate size of candidate sizes corresponding to the X1 candidate waveforms among the X2 candidate sizes.

100

| Receiving first information block and receiving first DCI format | — 101 |
|---|---|

| Transmitting first PUSCH | — 102 |
|---|---|

FIG. 1

5GS/EPS 200

HSS/UDM — 220

NR-RAN/EUTRAN 202

UE — 201

NR/Evolved Node B — 203

MME/AMF/SMF — 211

Other MMEs/AMFs/SMFs — 214

Other NR/Evolved Nodes B — 204

S-GW/UPF — 212

P-GW/UPF — 213

Internet service — 230

UE — 241

5GC/EPC 210

FIG. 2

**Control Plane 300**

305

| L3 | RRC — 306 |
| L2 | PDCP — 304 |
| | RLC — 303 |
| | MAC — 302 |
| L1 | PHY — 301 |

**User Plane 350**

355

| L2 | SDAP — 356 |
| | PDCP — 354 |
| | RLC — 353 |
| | MAC — 352 |
| L1 | PHY — 351 |

FIG. 3

**400**

**415**

**420**  **460**

**416**  **456**

**455**

Transmitting processor

Transmitter
Receiver

Transmitter
Receiver

Transmitting processor

**450**

**440**

Controller/
processor

**420**  **460**

Controller/
processor

**490**

Memory

Receiving processor

Transmitter
Receiver

Transmitter
Receiver

Receiving processor

Memory

**430**  **412**  **416**  **456**  **452**  **480**

FIG. 4

| N500. Second node | | U550. First node |
|---|---|---|
| S501. transmitting second information block | second information block → | |
| | | S551. receiving second information block |
| S502. transmitting first information block | first information block → | |
| | | S552. receiving first information block |
| S503. transmitting first DCI format | first DCI format → | |
| | | S553. receiving first DCI format |
| | | S554. transmitting first PUSCH |
| S504. receiving first PUSCH | ← first PUSCH | |
| End | | End |

FIG. 5

| First field corresponding to second waveform |
|---|

| '00...' | First field corresponding to first waveform |

MSB                      LSB

**Case A**

| '00...' | First field corresponding to second waveform |

| First field corresponding to first waveform |

MSB                      LSB

**Case B**

FIG. 6

701 Start

702 Whether first DCI format comprises second field — No

Yes

703 Second field indicates target waveform

704 Target waveform and reference waveform are the same

FIG. 7

Power

Transmit power of first PUSCH

First upper limit value

First power value

**Case A**

Power

Transmit power of first PUSCH

First upper limit value

First power value

**Case B**

FIG. 8

First DCI format

FIG. 9

| MCS index | modulation order | Target bitrate | Spectral efficiency |
|:---:|:---:|:---:|:---:|
| 0 | $a_0$ | $b_0$ | $c_0$ |
| 1 | $a_1$ | $b_1$ | $c_1$ |
| 2 | $a_2$ | $b_2$ | $c_2$ |
| 3 | $a_3$ | $b_3$ | $c_3$ |
| 4 | $a_4$ | $b_4$ | $c_4$ |
| 5 | $a_5$ | $b_5$ | $c_5$ |
| 6 | $a_6$ | $b_6$ | $c_6$ |
| 7 | $a_7$ | $b_7$ | $c_7$ |
| 8 | $a_8$ | $b_8$ | $c_8$ |
| ... | ... | ... | ... |
| R | $a_R$ | $b_R$ | $c_R$ |

FIG. 10

1    2    3    4        X2-1  X2

□   □   □   □   ...   □   □

Target waveform

1    2       X3-1  X3

□   □   ...   □   □

At least one of maximum rank, reference signal type, or transmission scheme

▨

FIG. 11

1200

**First node**

First receiver
1201

First transmitter
1202

FIG. 12

1300

**Second node**

Second transmitter
1301

Second receiver
1302

FIG. 13

## INTERNATIONAL SEARCH REPORT

| International application No. |
|---|
| **PCT/CN2023/109138** |

| A. | CLASSIFICATION OF SUBJECT MATTER |
|---|---|

H04W72/04(2023.01)i;  H04L 5/00(2006.01)i

According to International Patent Classification (IPC) or to both national classification and IPC

| B. | FIELDS SEARCHED |
|---|---|

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

CNABS; CNTXT; CNKI; VEN; DWPI; USTXT; WOTXT; 3GPP: 多, 载波, 载波聚合, 双连接, 物理下行控制信道, 调度, 同时, 信息块, 下行控制信息, 域, 波形, 尺寸, multi, carrier, carrier aggregation, DC, Dual Connectivity, PDCCH, scheduling, dispatch, simultaneously, duration, block, DCI, format, field, PUSCH, waveform, size

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 114257361 A (SHANGHAI LANGBO COMMUNICATION TECHNOLOGY CO., LTD.) 29 March 2022 (2022-03-29) description, paragraphs [0062]-[0477] | 1-10 |
| A | CN 112436869 A (QUECTEL WIRELESS SOLUTIONS CO., LTD.) 02 March 2021 (2021-03-02) description, paragraphs [0058]-[0308] | 1-10 |
| A | CN 114337756 A (VIVO COMMUNICATION TECHNOLOGY CO., LTD.) 12 April 2022 (2022-04-12) entire document | 1-10 |
| A | US 2021321400 A1 (QUALCOMM INC.) 14 October 2021 (2021-10-14) entire document | 1-10 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 October 2023** | **13 October 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/109138**

| Patent document cited in search report | | | Publication date (day/month/year) | Patent family member(s) | | | Publication date (day/month/year) |
|---|---|---|---|---|---|---|---|
| CN | 114257361 | A | 29 March 2022 | WO | 2022063146 | A1 | 31 March 2022 |
| | | | | EP | 4207662 | A1 | 05 July 2023 |
| CN | 112436869 | A | 02 March 2021 | | None | | |
| CN | 114337756 | A | 12 April 2022 | WO | 2022068867 | A1 | 07 April 2022 |
| | | | | KR | 20230074558 | A | 30 May 2023 |
| US | 2021321400 | A1 | 14 October 2021 | WO | 2021207416 | A1 | 14 October 2021 |
| | | | | EP | 4133867 | A1 | 15 February 2023 |

Form PCT/ISA/210 (patent family annex) (July 2022)